# EUROPEAN PATENT SPECIFICATION

(11) **EP 4 302 969 B1**
(45) Date of publication and mention of the grant of the patent: **06.05.2026**
(21) Application number: 22763203.1
(22) Date of filing: 28.02.2022
(51) Int. Cl.: B29C 65/02, B29C 65/78, B29C 65/18, B29C 65/14, B29C 65/20, B29C 69/00, B29L 31/00

(54) **HOLLOW CONTAINER MANUFACTURING APPARATUS**
VORRICHTUNG ZUR HERSTELLUNG VON HOHLBEHÄLTERN
APPAREIL DE FABRICATION DE RÉCIPIENT CREUX

(30) Priority: 02.03.2021 JP 2021032256
(43) Date of publication of application: 10.01.2024
(73) Proprietor: Yachiyo Industry Co., Ltd., Sayama-shi, Saitama 350-1335 (JP); The Japan Steel Works, Ltd., Tokyo 141-0032 (JP)
(72) Inventor: Yoshioka Junya, Sayama-shi, Saitama 350-1328 (JP); USUKI Noriyoshi, Sayama-Shi, Saitama 350-1335 (JP); FUKUDA Keiko, Sayama-shi, Saitama 350-1328 (JP); NAKAYAMA Kiyotaka, Tokyo 141-0032 (JP); NAITO Akihiro, Tokyo 141-0032 (JP); UEMURA Takashi, Tokyo 141-0032 (JP); SUSA Keigo, Tokyo 141-0032 (JP); MATSUZAKI Koji, Tokyo 141-0032 (JP); NISHIDA Shoso, Hiroshima-shi, Hiroshima 739-1751 (JP)
(74) Representative: Dehns
(86) International application number: PCT/JP2022/008338
(87) International publication number: WO 2022/186147

(56) References cited:
- EP-B1- 1 572 437
- JP-A- 2006 513 062
- JP-A- 2019 155 775
- JP-B2- 5 073 704

## Description

### TECHNICAL FIELD

The present invention relates to a hollow container manufacturing apparatus.

### BACKGROUND ART

There has been an apparatus of manufacturing a hollow container with a hollow interior, such as a fuel tank for storing fuel (see Patent Document 1). A conventional hollow container manufacturing apparatus forms a pair of half hollow molds (workpieces) by primary molding, then heats ends of peripheral walls of the molds with a heating unit such as a heater, and welds the ends such as by vibration welding. The conventional hollow container manufacturing apparatus is provided with a heating device to hold one end of the heating unit and move the heating unit back and forth, with respect to molding dies. In addition, Patent Document 2 discloses a molding method for a hollow molded product, a hollow molded product and an apparatus for manufacturing the same. The method includes: a primary molding in which a movable and fixed dies are used to mold a pair of semi-molded products, the movable mold is moved relative to the fixed mold, with one of the pair remaining in the fixed mold and the other of the pair remaining in the movable mold, to cause joining end surfaces of the pair to face each other at a distance, and a heater is inserted between, and melt, said surfaces; and a secondary molding in which the dies are closed and the joining end surfaces are crimped to obtain a hollow molded product. Patent Document 3 discloses a heating element welding machine, and method for quick refitting of tools of heating element welding machines.

### PRIOR ART DOCUMENT

### Patent Document

Patent Document 1: Japanese Patent No. 6657280;
Patent Document 2: Japanese Patent No. 5073704 B2; and
Patent Document 3: European Patent Application Publication No. 1572437 B1

### SUMMARY OF THE INVENTION

### Problems to be Solved

A conventional hollow container manufacturing apparatus including a heating unit for welding workpieces has the heating unit with a cantilever structure. Accordingly, the heating unit has, with respect to one end thereof supporting the heating unit, a risk of the other end thereof (front end in a direction of the heating unit being moved forward) being tilted downward or vibrated. The Applicant has found that if the heating unit were tilted or vibrated, positioning the heating unit becomes difficult, so that temperature varies at ends of the workpieces, to have a risk of poor welding. In addition, for manufacturing a large hollow container, size of the heating unit is also increased accordingly, to make the above-described problem more evident.

The present invention has been devised from such a point of view, and is intended to provide a hollow container manufacturing apparatus to facilitate positioning a heating unit with respect to a pair of workpieces and increase welding strength.

### Solution to Problems

In order to solve the above-described problem, the present invention provides a hollow container manufacturing apparatus including: a fixed molding die having a cavity; a movable molding die having a cavity and moved in a direction of coming closer to or away from the fixed molding die; a heating unit to be placed between the fixed molding die and movable molding die to heat a pair of workpieces in the cavities of the fixed molding die and movable molding die; guide rails to move the heating unit; and a drive mechanism to move the heating unit back and forth with respect to the fixed molding die or the movable molding die, along the guide rails, wherein the pair of workpieces is heated by the heating unit and then welded to each other. The guide rails to move the heating unit are partly arranged either in an opposing surface of the fixed molding die to oppose the movable molding die or in an opposing surface of the movable molding die to oppose the fixed molding die.

A conventional hollow container manufacturing apparatus has operated a heater device, having a heating unit, separately from molding dies. In contrast, according to the present invention, the guide rails, used for moving the heating unit, are partly arranged in the fixed molding die or the movable molding die, so that a distance between the heating unit and the fixed molding die or movable molding die remains unchanged even when the heating unit is moved back and forth. Additionally, the heating unit is free from vibration because the heating unit is moved back and forth on the guide rails. This facilitates positioning the heating unit with respect to the pair of workpieces, and evenly heating ends of the pair of workpieces. As a result, uneven heating can be eliminated or reduced, to increase welding strength.

In addition, each of the pair of workpieces includes at least a bottom and a peripheral wall rising from the bottom, and the apparatus preferably further includes holding mechanisms to partly press the pair of workpieces, in the respective cavities of the fixed molding die and movable molding die, against the fixed molding die and movable molding die, respectively.

This configuration allows the workpieces in the cavities to be reliably fixed even when the workpieces have had cooling shrinkage or distortion coming from primary molding. This prevents the workpieces from coming off the cavities, to prevent the workpieces from contacting the heating unit moved between the fixed molding die and movable molding die, and to improve accuracy of positioning the heating unit with respect to the pair of workpieces.

Further, it is preferable that the holding mechanisms each have a cylinder and a partial core moved back and forth by the cylinder, wherein the partial cores are moved forward by the cylinders to partly press the workpieces against the fixed molding die and movable molding die, respectively.

This configuration simply accomplishes a mechanism to reliably fix the workpieces in the cavities.

Still further, it is preferable that the holding mechanisms each include a force-exerting means to exert a force from outside to a side surface of each of the workpieces, and a pressing part provided at a front end of the force-exerting means, wherein the workpieces are partly pressed against the fixed molding die and movable molding die, respectively, by respective forces by the force-exerting means.

This configuration simply accomplishes a mechanism to reliably fix the workpieces in the cavities.

Still further, it is preferable that the apparatus includes a centering mechanism to make a distance between the heating unit and the fixed molding die equal to a distance between the heating unit and the movable molding die, after the heating unit has been placed between the fixed molding die and movable molding die.

This configuration allows for heating the ends of the pair of workpieces evenly and reliably. This eliminates or reduces uneven heating, to increase welding strength.

Still further, it is preferable that the centering mechanism includes: a middle plate projecting outside the heating unit; a first spring interposed between the middle plate and the fixed molding die; and a second spring interposed between the middle plate and the movable molding die and having the same spring constant as the first spring.

This configuration simply accomplishes a mechanism to heat the ends of the pair of workpieces evenly and reliably.

Still further, it is preferable that the centering mechanism includes: a guide plate projecting outside the heating unit; a centering guide rail to which the guide plate is fitted, a pair of racks attached to the fixed molding die and movable molding die and extending in a direction of the movable molding die being moved; a gear meshing with the pair of racks; and a gear box housing the gear and portions of the pair of racks and attached to the centering guide rail.

This configuration simply accomplishes a mechanism to heat the ends of the pair of workpieces evenly and reliably.

Alternatively, it is preferable that the centering mechanism includes: a guide plate projecting outside the heating unit; a centering guide rail to which the guide plate is fitted; a first link whose center is rotatably fixed to the centering guide rail; and a pair of second links each having a first end rotatably fixed to each of ends of the first link and a second end rotatably attached to each of the fixed molding die and movable molding die.

This configuration simply accomplishes a mechanism to heat the ends of the pair of workpieces evenly and reliably.

Still further, in a case where the heating unit is brought into contact with the pair of workpieces during welding, it is preferable that the fixed molding die or movable molding die includes a first communication hole to communicate with outside, and the heating unit includes a second communication hole to communicate with the first communication hole.

This configuration allows for letting air out through the first and second communication holes, to prevent compressing forces acting on contact portions between the ends of the workpieces and the heating unit from being reduced due to thermal expansion. This further improves welding strength between the workpieces.

Still further, in a case where the heating unit is brought into contact with the pair of workpieces during welding, it is preferable that the heating unit includes a heater communication hole to let out air in the fixed molding die and movable molding die.

This configuration allows for letting air out through the heater communication hole, to prevent the compressing forces acting on the contact portions between the ends of the workpieces and the heating unit from being reduced due to thermal expansion. This further improves welding strength between the workpieces.

Still further, in a case where the heating unit is not brought into contact with the pair of workpieces during welding, it is preferable that the heating unit has a protective frame surrounding the heating unit, wherein the protective frame is moved back and forth with respect to the fixed molding die, together with the heating unit and along the guide rails used for moving the heating unit.

This configuration reliably prevents the heating unit, while being moved so as to be placed between the molding dies, from contacting the fixed molding die or movable molding die, or one or more of the workpieces. This prevents the heating unit from being damaged.

### Advantageous Effects of the Invention

The hollow container manufacturing apparatus of the present invention facilitates positioning the heating unit with respect to the pair of workpieces and increases welding strength.

### BRIEF DESCRIPTION OF DRAWINGS

FIG. 1 is a rear view of a hollow container manufacturing apparatus according to a first or fifth embodiment;
FIG. 2 is a side view of a fixed molding die in FIG. 1;
FIG. 3 is a plan view of the apparatus in FIG. 1, as viewed from along an arrowed line A-A;
FIG. 4 is a plan view of the apparatus in FIG. 1, as viewed from along an arrowed line B-B;
FIG. 5 is an illustration (1) of a holding mechanism in a second embodiment;
FIG. 6A is an illustration (2-1) of the holding mechanism in the second embodiment, when stretched;
FIG. 6B is the illustration (2-1) of the holding mechanism in the second embodiment, when contracted;
FIG. 7 is an illustration (2-2) of the holding mechanism in the second embodiment;
FIG. 8 is an illustration (1) of a hollow container manufacturing apparatus according to a third embodiment;
FIG. 9 is an illustration (2) of the hollow container manufacturing apparatus according to the third embodiment;
FIG. 10 is a side view of a spring-type centering mechanism in the fourth embodiment;
FIG. 11 is a rear view of the centering mechanism in FIG. 10, as viewed from a direction C;
FIG. 12 is a plan view of the centering mechanism in FIG. 10, as viewed from along an arrowed line D-D;
FIG. 13 illustrates demonstration of the spring-type centering mechanism;
FIG. 14 is a side view of a rack-and-pinion type centering mechanism in the fourth embodiment;
FIG. 15 is a rear view of the rack-and-pinion type centering mechanism in FIG. 14;
FIG. 16 is a plan view of the centering mechanism in FIG. 14, as viewed from along an arrowed line E-E;
FIG. 17 is a cross-sectional view of the centering mechanism in FIG. 16, taken along an arrowed line F-F;
FIG. 18 is a rear view of the centering mechanism in FIG. 14, with the molding dies opened;
FIG. 19 is a side view of a link type centering mechanism in the fourth embodiment;
FIG. 20 is a rear view of the link type centering mechanism in FIG. 19; and
FIG. 21 is a rear view of the centering mechanism in FIG. 19, with the molding dies opened.

### DETAILED DESCRIPTION OF EMBODIMENTS

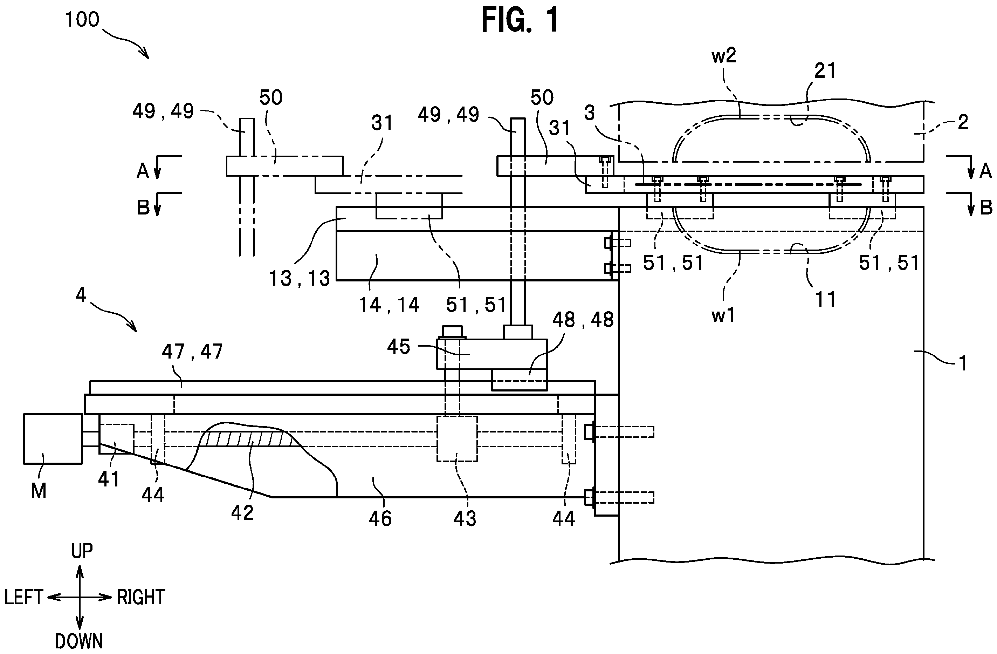

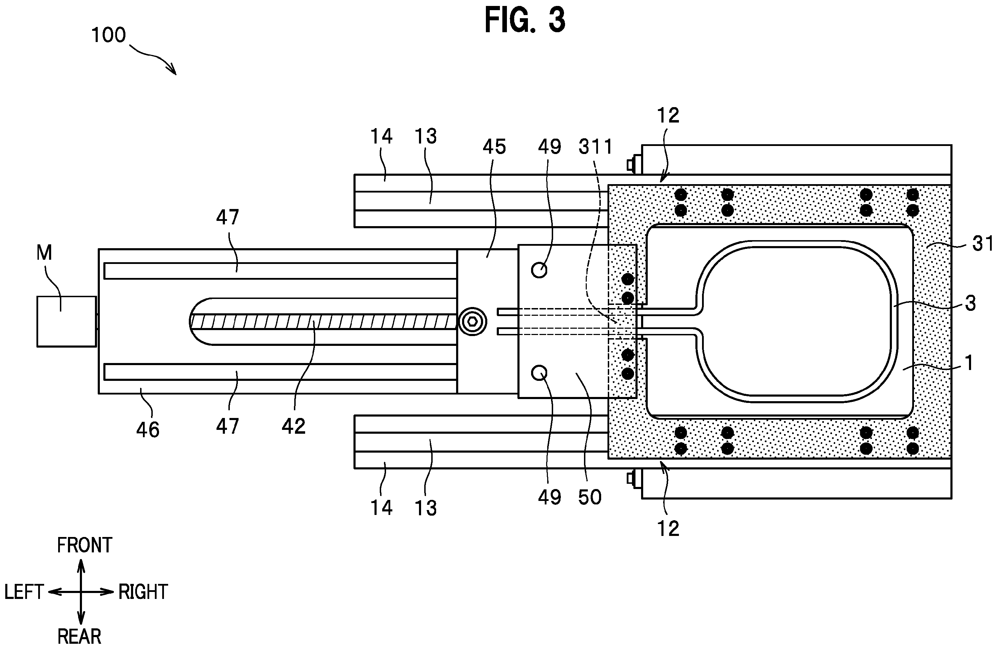

Directions are set in descriptions of embodiments, unless otherwise specified, such that a movable molding die is opened and closed in an up-down direction, with respect to the fixed molding die, and a heating unit is moved back and forth in a right-left direction so as to be placed between the fixed molding die and movable molding die (see FIG. 1 and others). A front-rear direction is as shown in FIG. 3.

### First Embodiment

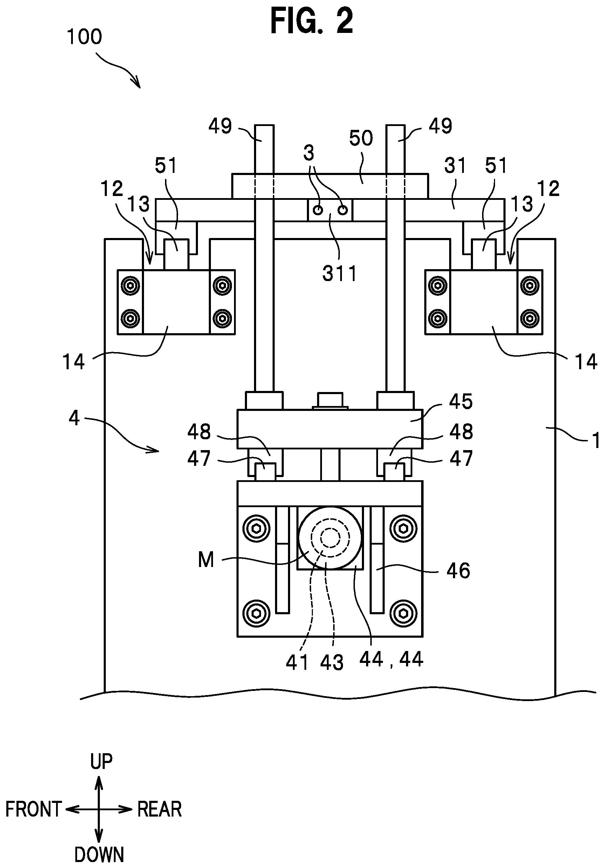

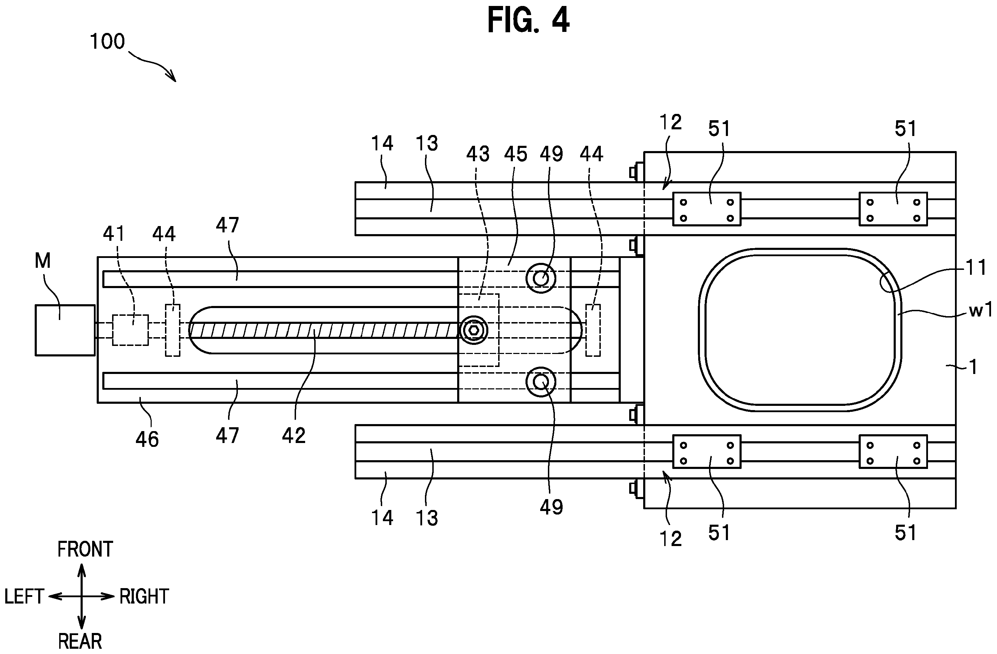

A description is given of a hollow container manufacturing apparatus according to a first embodiment, with reference to FIGS. 1 to 4. FIG. FIG. 1 is a rear view of the hollow container manufacturing apparatus. FIG. 2 is a side view of a fixed molding die. FIG. 3 is a plan view of the apparatus in FIG. 1, as viewed from along an arrowed line A-A. FIG. 4 is a plan view of the apparatus in FIG. 1, as viewed from along an arrowed line B-B.

### [Configuration]

A hollow container manufacturing apparatus 100 of the first embodiment includes a fixed molding die 1, a movable molding die 2, a heating unit 3, and a drive mechanism 4. The fixed molding die 1 is a molding die of a fixed type for secondary molding. The fixed molding die 1 includes a cavity 11, grooves 12, guide rails 13, and brackets 14.

The cavity 11 is where a workpiece w1 is set. The workpiece w1 is a half hollow mold as a primary mold. The workpiece w1 is transported by a dedicated transport device (not shown) so as to be placed between the fixed molding die 1 and movable molding die 2, and then set in the cavity 11. The grooves 12 are incised portions formed in a top surface of the fixed molding die 1 (opposing surface to the movable molding die 2) on outsides in the front-rear direction of the cavity 11 and extending in the right-left direction.

The guide rails 13 are guide rails used for moving the heating unit to guide the heating unit 3 being moved. The guide rails 13 are rail members extending in the right-left direction, with portions thereof arranged in bottoms of the grooves 12 and the rest thereof arranged in the brackets 14. That is, the guide rails 13 are partly provided in an opposing surface of the fixed molding die 1 to oppose the movable molding die 2. The brackets 14 are members to support said the rest of the guide rails 13 extending leftward from the grooves 12 in the fixed molding die 1. The brackets 14 are attached to a side surface of the fixed molding die 1.

The movable molding die 2 is a molding die for secondary molding, which is movable in the up-down direction. The movable molding die 2 includes a cavity 21. The movable molding die 2 is moved upward so as to come away from the fixed molding die 1, and moved downward so as to come closer to the fixed molding die 1. The cavity 21 is where a workpiece w2 is set. The workpiece w2 is a half hollow mold as a primary mold. The workpiece w2 is transported by a dedicated transport device (not shown) so as to be placed between the fixed molding die 1 and movable molding die 2, and then set in the cavity 21.

The heating unit 3 is a heat source to heat and melt welded surfaces of the workpieces w1 and w2. The heating unit 3 of the first embodiment is a non-contact type (the heat unit 3 does not contact either one of the workpieces w1 and w2) IR heater. The IR heater includes a halogen heater and a carbon heater, but there is no limitation as long as the heater can radiate infrared rays, near-infrared rays, or the like to heat the heating unit 3 without contact. A shape of the heating unit 3 corresponds shapes of the welded surfaces of the workpieces w1 and w2. Alternatively, the heating unit 3 may have a structure provided with two or more rod-shaped heaters or a zigzag-shaped heater so as to heat all over the welded surfaces. The heating unit 3 includes a protective frame 31 (dotted portion in FIG. 3). The heating unit 3 is fixed to the protective frame 31 at a holding portion 311, but the heating unit 3 and protective frame 31 may be shaped so as to be fixed by the two or more holding portions 311, because the two or more holding portions 311 makes the heating unit 3 less likely shaky. Details of the protective frame 31 is described below. In the first embodiment, the heating unit 3 is described as a unit including the protective frame 31.

The drive mechanism 4 is a mechanism to move the heating unit 3 back and forth in the right-left direction, between the fixed molding die 1 and movable molding die 2. The drive mechanism 4 moves the heating unit 3 back and forth, with respect to the fixed molding die 1, along the guide rails 13. The drive mechanism 4 includes a motor M, a coupling 41, a ball screw 42, a ball screw nut 43, bearing cases 44, a plate 45, a bracket 46, guide rails 47, slide blocks 48, guide rods 49, a plate 50, and four slide blocks 51.

The motor M is a servo motor, for example. The coupling 41 is a member to connect the motor M with the ball screw 42. The ball screw 42 extends in the right-left direction. The ball screw nut 43 is moved in the right-left direction along the ball screw 42, in response to driving of the motor M. The bearing cases 44 are members including bearings (not shown) and supporting both ends of the ball screw 42.

The plate 45 is a plate-like body connected with the ball screw nut 43. The plate 45 is moved along guide rails 47 via the slide blocks 48. The bracket 46 is a member to support the guide rails 47. The bracket 46 has a substantially inverted U-shape, when laterally viewed, and extends in the right-left direction. The bracket 46 is attached to the side surface of the fixed molding die 1.

The guide rails 47 are rail members extending in the right-left direction, and are arranged on a top surface of the bracket 46 with space therebetween in the front-rear direction. The slide blocks 48 are sliders fitted onto the guide rails 47 and slid right and left along the guide rails 47. The plate 45 is fixed onto the slide blocks 48. The guide rails 47 are members to guide movement of the plate 45.

The guide rods 49 are rod-shaped bodies attached onto the top surface of the plate 45 and extending upward. The guide rods 49 runs through the plate 50 and are attached to the plate 50. The plate 50 is a plate-like body connected with the plate 45 via the guide rods 49. An end of the plate 50 is attached to an end of the heating unit 3. The four slide blocks 51 are sliders fitted onto the guide rails 13 and slid right and left along the guide rails 13. Top surfaces of the slide blocks 51 are respectively fixed to, at four corners of, the heating unit 3. With the configuration as described above, the motor M is driven to move the heating unit 3 in the right-left direction along the guide rails 13.

### [Operation]

Before the secondary molding starts, the ball screw nut 43 is on standby at the leftmost position of the ball screw 42. Accordingly, the plate 45 is also on standby at the leftmost positions of the guide rails 47. Additionally, the plate 50 and heating unit 3 are also on standby at the leftmost positions of the guide rails 13, that is, at positions where there is no interference with the molding dies.

When the secondary molding starts, the fixed molding die 1 and movable molding die 2 are open, and the workpieces w1 and w2 are set in the cavities 11 and 21, respectively. Next, the movable molding die 2 is moved downward and is stopped, leaving a space into which the heating unit 3 can be inserted.

The motor M then rotates forward to move the ball screw nut 43 rightward. The plate 45 coupled with the ball screw nut 43 is slid on the guide rails 47 as the slide blocks 48 are slid, and moved rightward. Additionally, the plate 50 and heating unit 3, which are coupled with the plate 45 via the guide rods 49, are slid on the guide rails 13 as the four slide blocks 51 are slid, and moved rightward. As a result, the heating unit 3 is placed in the vicinity to the workpieces w1 and w2, and the heating unit 3 heats end surfaces of the workpieces w1 and w2. After heating, the motor M reversely rotates to move the ball screw nut 43 leftward. The plate 45 coupled with the ball screw nut 43 is then slid on the guide rails 47 as the slide blocks 48 are slid, and moved leftward. Additionally, the plate 50 and heating unit 3, which are coupled with the plate 45 via the guide rods 49, are slid on the guide rails 13 as the four slide blocks 51 are slid, and moved back leftward. The movable molding die 2 is then moved downward, and the workpieces w1 and w2 are pressed against each other and welded. After welding, the molding dies are opened and the workpieces w1 and w2 are removed, to complete the secondary molding.

A conventional hollow container manufacturing apparatus has operated a heater device, having a heating unit, independently from molding dies. In contrast, according to the hollow container manufacturing apparatus 100 of the first embodiment, the guide rails 13 are partly arranged in the fixed molding die 1, so that a distance between the heating unit 3 and the fixed molding die 1 remains unchanged even when the heating unit 3 is moved back and forth. Additionally, the heating unit 3 is free from vibration because the heating unit 3 is moved back and forth on the guide rails 13. This facilitates positioning the heating unit 3 with respect to the pair of workpieces w1 and w2, and evenly heating the ends of the pair of workpieces w1 and w2. As a result, uneven heating can be eliminated or reduced, to increase welding strength. In other words, according to the present embodiment, the distance between the fixed molding die 1 and heating unit 3 is fixed and thus only a distance between the movable molding die 2 and heating unit 3 needs to be adjusted to match the distance between the fixed molding die 1 and heating unit 3, to facilitate positioning the heating unit 3.

In addition, in the present embodiment, the pair of guide rails 13 is bilaterally provided on the outsides in the front-rear direction of the cavity 11, to have the heating unit 3 stably supported without vibration. Further, the heating unit 3 is merely moved on the guide rails 13 provided in the fixed molding die 1, so that the distance between the fixed molding die 1 and the heating unit 3 remains unchanged even if the guide rails 47 and the like are poorly installed. In this case, the guide rod 49 and the plate 50 may be engaged with each other, with a clearance therebetween, for instance, to absorb installation errors of the guide rails 47 and the like.

### Second Embodiment

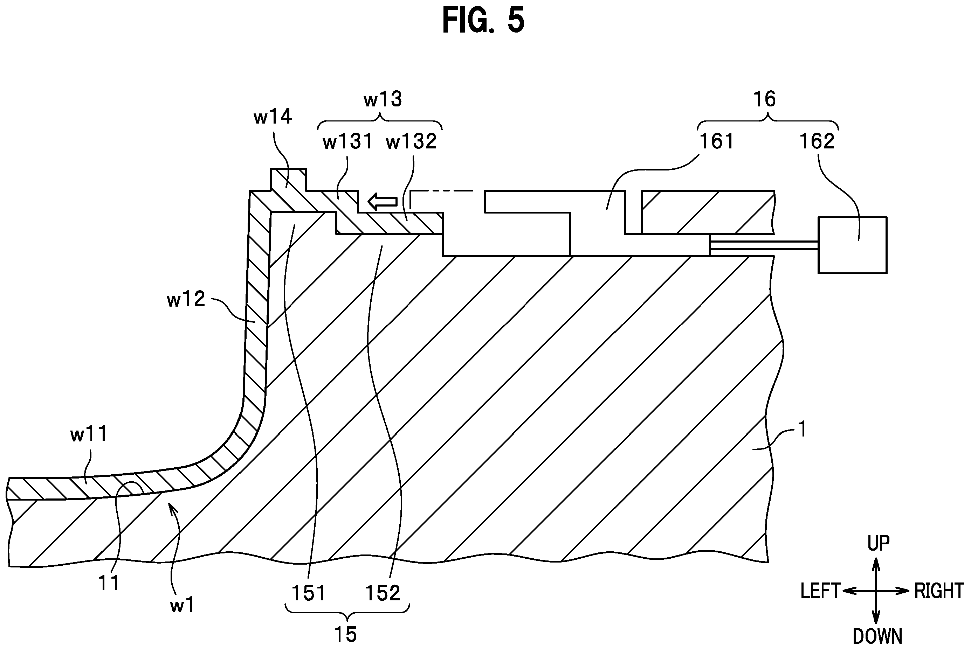

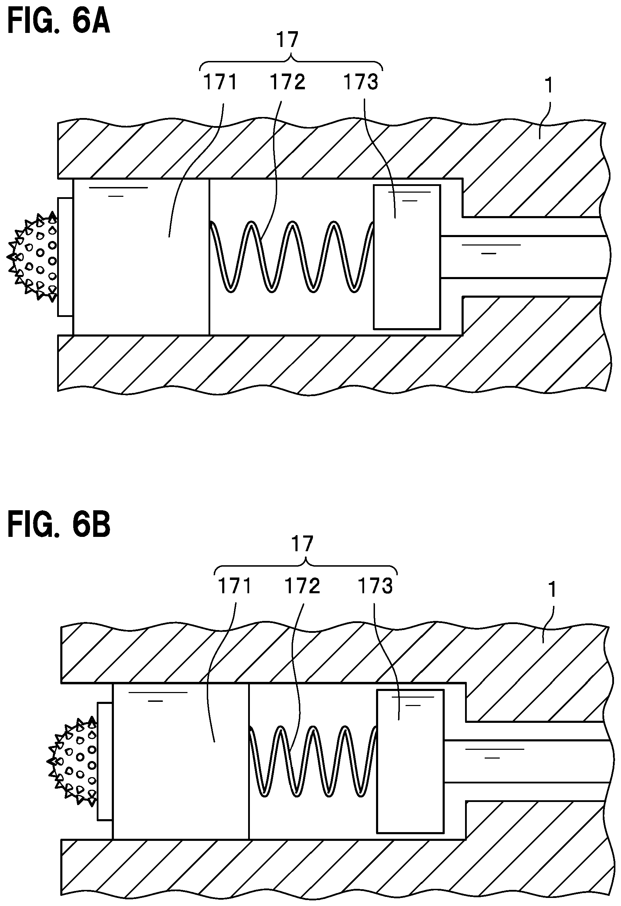

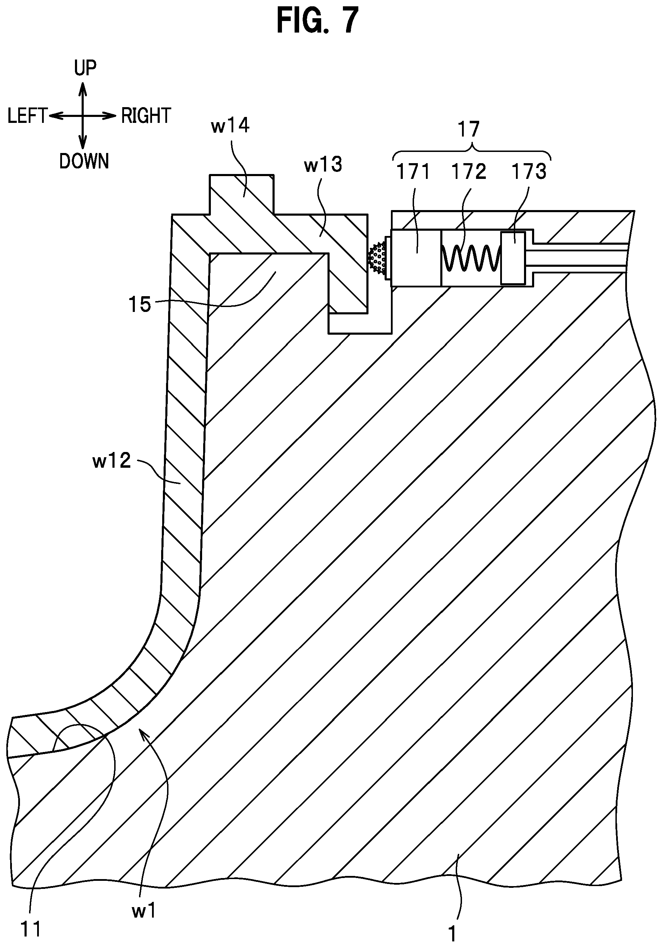

A description is given of a hollow container manufacturing apparatus according to a second embodiment, with reference to FIGS. 5 to 7. FIG. 5 is an illustration (1) of a holding mechanism in the second embodiment. FIG. 6A is an illustration (2-1) of the holding mechanism in the second embodiment, when stretched, and FIG. 6B is an illustration (2-1) of the holding mechanism in the second embodiment, when contracted. FIG. 7 is an illustration (2-2) of the holding mechanism in the second embodiment.

### [First Configuration]

FIG. 5 is a cross-sectional view of the workpiece w1 set in the cavity 11 of the fixed molding die 1. A description is first given of the workpiece w1. The workpiece w1 includes a bottom portion w11, a peripheral wall portion w12, a flange portion w13, and a welded portion w14.

The bottom portion w11 comes into close contact with a bottom of the cavity 11. The peripheral wall portion w12 rises from a peripheral edge of the bottom portion w11 and comes into close contact with the peripheral wall portion of the cavity 11.

The flange portion w13 extends radially outward, all around a rim of the cavity 11, from the peripheral wall portion w12. The flange portion w13 in FIG. 5 includes a first flange portion w131 and a second flange portion w132. The first flange portion w131 extends radially outward from the peripheral wall portion w12. The height of the first flange portion w131 is the same as that of an end of the peripheral wall portion w12. The second flange portion w132 extends radially outward from the first flange portion w131.

A step is formed between the first flange portion w131 and second flange portion w132. As shown in FIG. 5, when the workpiece w1 is set in the cavity 11, the height of the second flange portion w132 is lower than that of the first flange portion w131 .

The welded portion w14 protrudes, from the flange portion w13, on an opposite side of the flange portion w13 to the bottom portion w11. An end of the welded portion w14 is heated and melted by the heating unit 3. The welded portion w14, when the workpiece w1 is set in the cavity 11, is positioned above the opposing surface of the fixed molding die 1. This allows the protruding welded portion w14 to be located closer to the heating unit 3, to enhance heating efficiency.

In addition, the fixed molding die 1 has a peripheral edge 15. The peripheral edge 15 protrudes all around the rim of the cavity 11. The peripheral edge 15 includes a first peripheral edge 151 and a second peripheral edge 152. The first peripheral edge 151 protrudes all around the rim of the cavity 11. The first flange portion w131 of the workpiece w1 set in the cavity 11 is fitted onto the first peripheral edge 151.

The second peripheral edge 152 protrudes all around the rim of the cavity 11, continuously on the outer side of the first peripheral edge 151. As shown in FIG. 5, when the workpiece w1 is set in the cavity 11, the height of the second peripheral edge 152 is lower than that of the first peripheral edge 151. The second flange portion w132 of the workpiece w1 set in the cavity 11 is placed on the second peripheral edge 152.

Further, the fixed molding die 1 has a holding mechanism 16. The holding mechanism 16 includes a partial core 161 and a cylinder 162.

The partial core 161 is a slider to be slid on the opposing surface (top surface) of the fixed molding die 1. The partial core 161 is formed to be engaged with the second peripheral 152, and the second flange portion w132 placed on the second peripheral edge 152. The partial core 161 has a crank shape in the present embodiment, as laterally viewed.

The cylinder 162 is a driving means to move the partial core 161 toward, and back from, the workpiece w1. The cylinder 162 can be, but not limited to, pneumatic, hydraulic, or electric, for example. Additionally, the cylinder 162 is preferably provided with a limit switch or the like for checking operation of the partial core 161. This allows for checking that the partial core 161 reliably fixes the workpiece w1, to prevent problems due to malfunction. Note that the partial core 161 is partially embedded in an upper portion of the fixed molding die 1, as shown in FIG. 5. This prevents the partial core 161, moved back and forth with respect to the workpiece w1, from coming off the fixed molding die 1.

### [Operation]

After the workpiece w1 molded by the primary molding has been set in the cavity 11, the cylinder 162 is moved forward to slide the partial core 161 on the top surface of the fixed molding die 1. Then, a front end of the partial core 161 is positioned on the second flange portion w132 placed on the second peripheral edge 152. In this manner, the partial core 161 presses the second flange portion w132 against the fixed molding die 1 from above. The heating unit 3 moved between the molding dies heats and melts the welded portion w14 of the workpiece w1 pressed against the partial core 161.

A workpiece molded by primary molding may undergo cooling shrinkage or distortion. For this reason, when the workpiece is set in a different molding die from the primary molding and thermally welded by secondary molding, a conventional apparatus has had a risk of the workpiece coming off a cavity of a molding die due to mismatch between itself and the cavity or breaking loose. Without the workpiece being properly set in the molding die, there is a risk of variation in distance between the heating unit and the workpiece, or the workpiece coming into contact with the heating unit moved between the molding dies.

In contrast, the hollow container manufacturing apparatus 100 of the second embodiment, even if the workpiece w1 undergoes cooling shrinkage or distortion due to the primary molding, reliably fixes the workpiece w1 set in the cavity 11 to the fixed molding die 1. In this manner, the workpiece w1 is suitably set with respect to the cavity 11 of the fixed molding die 1, to prevent variation in distance between the heating unit 3 and workpiece w1. In addition, the workpiece w1 is prevented from coming off the cavity 11, to prevent the workpiece w1 from coming into contact with the heating unit 3 moved between the fixed molding die 1 and movable molding die 2.

Further, the partial core 161 and cylinder 162 are used as the holding mechanism 16, to readily accomplish a mechanism to reliably fix the workpiece w1 set in the cavity 11. Note that the two or more holding mechanisms 16, each using the partial core 161 and cylinder 162, are preferably arranged at equal intervals, circumferentially all around the flange portion w13 of the workpiece w1.

The description has been given above of the case where the holding mechanism 16 is provided in the fixed molding die 1, but the holding mechanism 16 may be provided in the movable molding die 2. Even if the workpiece w2 undergoes cooling shrinkage or distortion due to primary molding, having the holding mechanism 16 all around the rim of the cavity 21 of the movable molding die 2 allows the workpiece w2 set in the cavity 21 to be reliably fixed. This gives the same effect as in the case where the holding mechanism 16 is provided in the fixed molding die 1.

### [Second Configuration]

As another form of the holding mechanism, FIGS. 6 and 7 each show a holding mechanism 17. A recess may be formed in the top surface of the fixed molding die 1, for example, to store therein the holding mechanism 17. The holding mechanism 17 includes a pressing part 171, a force-exerting means 172, and a base part 173.

The pressing part 171 is a head of the holding mechanism 17 and is provided at a leading end of the force-exerting means 172. A front end of the pressing part 171 may be in a hemispherical shape, for example, and abuts on the flange portion w13 of the workpiece w1. As shown in FIGS. 6A and 6B, a surface of the pressing portion 171 in a hemispherical shape may be jagged, to increase frictional resistance with the workpiece w1, so that the workpiece w1 is pressed more reliably.

The force-exerting means 172 is a spring member (coil spring) used to exert a force from outside to the peripheral wall portion w12 of the workpiece w1. In particular, the force-exerting means 172 exerts a force on the pressing part 171 to cause the flange portion w13 of the workpiece w1 to be pressed toward the peripheral wall portion w12 (side surface of the peripheral wall portion w12). The base part 173 is a root of the holding mechanism 17 and is provided at a trailing end of the force-exerting means 172. An end of the base part 173 is fixed so as to be engaged in a recess storing the holding mechanism 17.

### [Operation]

As shown in FIG. 7, the fixed molding die 1 includes the peripheral edge 15 protruding all around the rim of the cavity 11. The flange portion w13 of the workpiece w1 set in the cavity 11 is fitted onto the peripheral edge 15. Note that the holding mechanism 17 is embedded in the upper portion of the fixed molding die 1, as shown in FIG. 7. This prevents the holding mechanism 17, moved back and forth with respect to the workpiece w1, from coming off the fixed molding die 1.

FIG. 6A illustrates a case where the workpiece w1 is not set in the cavity 11. That is, the force-exerting means 172 is extended the most. As shown in FIGS. 6B and 7, in a case where the workpiece w1 is set in the cavity 11, the flange portion w13 of the workpiece w1 pushes the pressing part 171 back in a direction of the force-exerting means 172 being contracted. In other words, the workpiece w1 is set in the cavity 11 against the force by the force-exerting means 172. Accordingly, the holding mechanism 17 presses the flange portion w13 against the fixed molding die 1 with the force by the force-exerting means 172. The heating unit 3 moved between the molding dies heats and melts the welded portion w14 of the workpiece w1 pressed by the pressing part 171.

The holding mechanism 17 reliably fixes the workpiece w1 set in the cavity 11, as with the holding mechanism 16, even if the workpiece w1 undergoes cooling shrinkage or distortion due to the primary molding. This allows the workpiece w1 to be suitably set in the cavity 11 of the fixed molding die 1, to prevent variation in distance between the heating unit 3 and the workpiece w1. In addition, the workpiece w1 is prevented from coming off the cavity 11, to avoid the workpiece w1 from coming into contact with the heating unit 3 moved between the fixed molding die 1 and movable molding die 2.

Further, the pressing part 171, the force-exerting means 172, and the base part 173 are used for the holding mechanism 17, to simply accomplish a mechanism to reliably fix the workpiece w1 set in the cavity 11. Note that the two or more holding mechanisms 17, using the pressing part 171, the force-exerting means 172, and the base part 173, are preferably arranged at equal intervals, circumferentially all around the flange portion w13 of the workpiece w1.

The description has been given above of the case where the holding mechanism 17 is provided in the fixed molding die 1, but the holding mechanism 17 may be provided in the movable molding die 2. Even if the workpiece w2 undergoes cooling shrinkage or distortion due to the primary molding, having the holding mechanism 17 all around the rim of the cavity 21 of the movable molding die 2 allows the workpiece w2 set in the cavity 21 to be reliably fixed. This gives the same effect as in the case where the holding mechanism 17 is provided in the fixed molding die 1.

Note that the front end of the pressing part 171 is formed to have the jagged surface in a hemispherical shape, as an example, but may be formed to have another shape, as long as the workpiece w1 or w2 is readily set and reliably held when the workpiece w1 or w2 is set in the cavity 11 or 21.

Note that the holding mechanism 16 or the holding mechanism 17 is provided in the fixed molding die 1 or the movable molding die 2 in each of the first and second configurations, to have the workpiece w1 or w2 set in the cavity 11 or 21 and then fixed, but the invention is not limited thereto. The holding mechanism 16 or the holding mechanism 17 may be provided in each of the fixed molding die 1 and movable molding die 2. More preferably, the movable molding die 2 may be moved downward after the workpieces w1 and w2 have been set in the fixed molding die 1 and movable molding die 2, respectively, to have the welded portions of the workpieces w1 and w2 lightly contacted with each other, and then the workpieces w1 and w2 are fixed by the holding mechanism 16 or the holding mechanism 17. This causes the workpieces w1 and w2 to be reliably fitted to the fixed molding die 1 and movable molding die 2, to fix the workpieces w1 and w2 more reliably.

### Third Embodiment

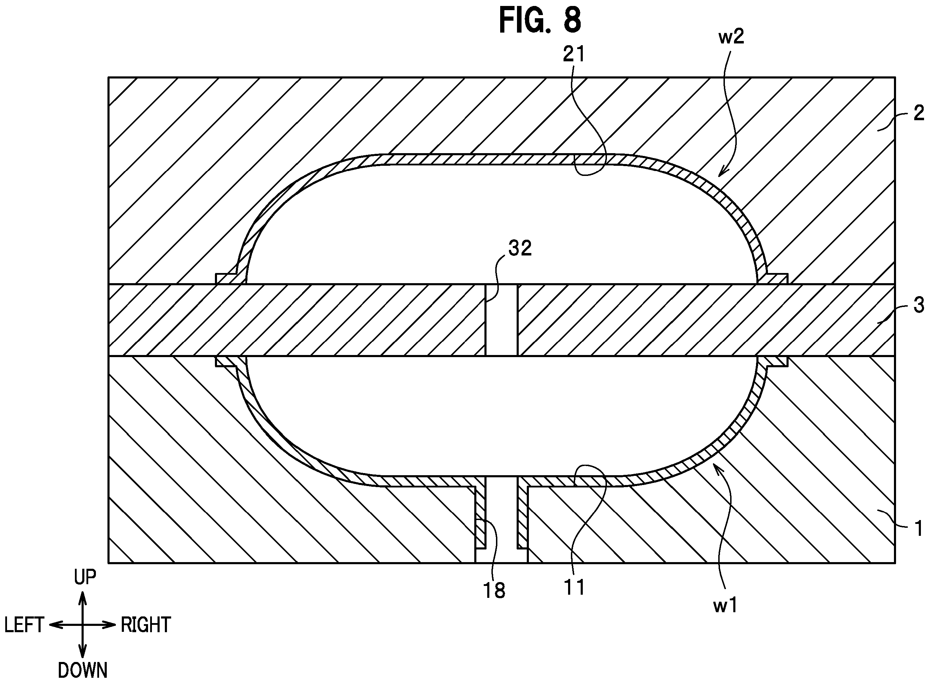

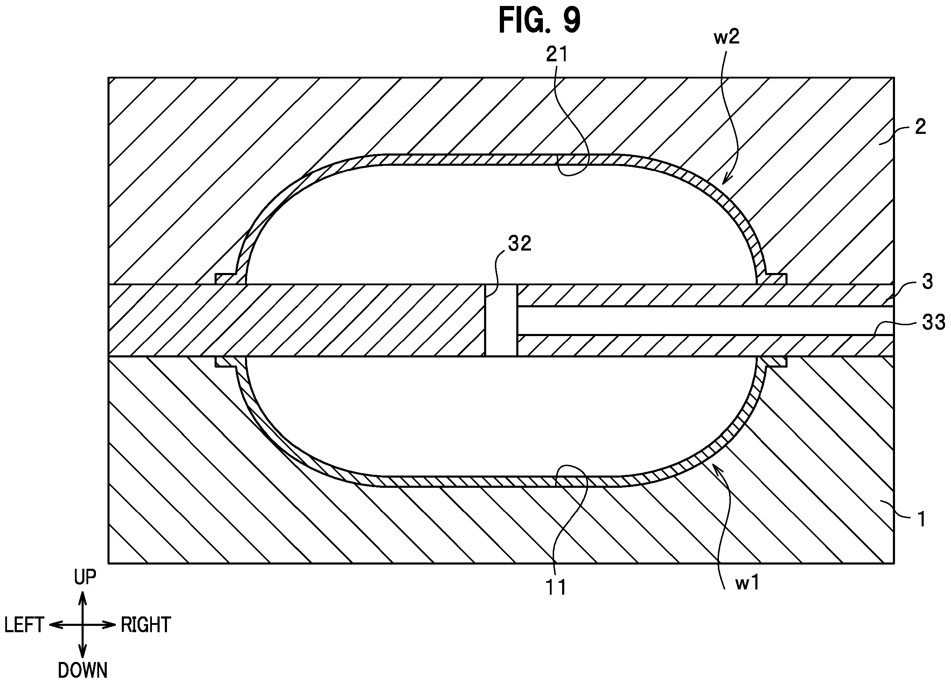

A description is given of a hollow container manufacturing apparatus according to a third embodiment, with reference to FIGS. 8 and 9. FIG. 8 is an illustration (1) of the hollow container manufacturing apparatus according to the third embodiment. FIG. 9 is an illustration (2) of the hollow container manufacturing apparatus according to the third embodiment.

### [First Configuration]

As shown in FIG. 8, the heating unit 3 of the third embodiment has a plate shape and is a contact type heating unit to contact the workpieces w1 and w2 during welding. The heating unit 3 heats and melts the end surfaces of the workpieces w1 and w2 respectively set in the cavities 11 and 21.

The fixed molding die 1 has a first communication hole 18 in the bottom of the cavity 11. The first communication hole 18 is a hole to communicate with outside of the fixed molding die 1. Note that the workpiece w1 has a hole corresponding to the first communication hole 18. In contrast, the movable molding die 2 is devoid of a hole to communicate from the cavity 21 to the outside.

The heating unit 3 has a second communication hole 32. The second communication hole 32 is a hole penetrating, in a through-thickness direction, substantially the center of the heating unit 3. Accordingly, the second communication hole 32 communicates with the first communication hole 18 during welding.

### [Operation]

Conventionally, the heating unit 3 has been devoid of the second communication hole 32, and thus has failed to discharge the air inside the workpiece w1, thermally expanded due to heating and melting, to the outside. This has increased the pressure inside the workpiece w2 and has also increased the temperature inside the workpiece w2. As a result, the heating unit 3 has failed to come into close contact with the workpiece w2 due to the thermal expansion of the air inside the workpiece w2, to have thermal contact resistance between itself and the workpiece w2 increased, resulting in poor thermal welding.

In contrast, according to the configuration in FIG. 8, the heating unit 3 includes the second communication hole 32 and the fixed molding die 1 includes the first communication hole 18, to allow the air inside the workpieces w1 and w2 to be discharged outside through the first communication hole 18 and second communication hole 32. This diminishes the thermal expansion in the workpieces w1 and w2, to reduce the thermal contact resistance without decreasing compressing forces applied to the contact portions between the ends of the workpieces w1 and w2 and the heating unit 3. As a result, the workpieces w1 and w2 are evenly melted to further improve welding strength. Note that an opening is formed in the workpiece w1, yet the opening can be used for arranging built-in parts such as a pump.

The configuration described above has the first communication hole 18 provided in the fixed molding die 1, but the first communication hole 18 may be provided in the movable molding die 2. Additionally, the second communication hole 32 in the heating unit 3 may be formed anywhere to be located inside the ends of the workpieces w1 and w2.

### [Second Configuration]

As shown in FIG. 9, the heating unit 3 of the third embodiment has a plate shape and is a contact type heating unit to contact the fixed molding die 1 and movable molding die 2 during welding. The heating unit 3 heats and melts the end faces of the workpieces w1 and w2 respectively set in the cavities 11 and 21. The fixed molding die 1 is devoid of a hole to communicate from the cavity 11 to the outside. The movable molding die 2 is also devoid of a hole to communicate from the cavity 21 to the outside.

The heating unit 3 has the second communication hole 32. The second communication hole 32 is a hole penetrating, in a through-thickness direction, substantially the center of the heating unit 3. Additionally, the heating unit 3 has a third communication hole 33 (heating unit communication hole). The third communication hole 33 is a hole penetrating, parallel to plate surfaces of, the heating unit 3 from substantially the center in the through-thickness direction in the second communication hole 32 to a side surface of the heating unit 3. That is, the air flowing through the second communication hole 32 and third communication hole 33 is discharged to the outside.

### [Operation]

According to the configuration in FIG. 9, the heating unit 3 includes the second communication hole 32 and third communication hole 33, to allow the air in the workpieces w1 and w2 to be discharged outside. This reduces the thermal contact resistance without decreasing the compressing forces applied to the contact portions between the ends of the workpieces w1 and w2 and the heating unit 3, even if the air in the workpieces w1 and w2 thermally expands due to heating by the heating unit 3. As a result, the welding strength of welding the workpieces w1 and w2 to each other is further improved. Additionally, the configuration in FIG. 9 has no need of forming holes in the fixed molding die 1 and movable molding die 2 for releasing air to the outside. Note that the position of the second communication hole 32 is not limited to the center. The second communication hole 32 may be formed anywhere to be located inside the ends of the workpieces w1 and w2 and communicating to the outside through the third communication hole 33.

### Fourth Embodiment

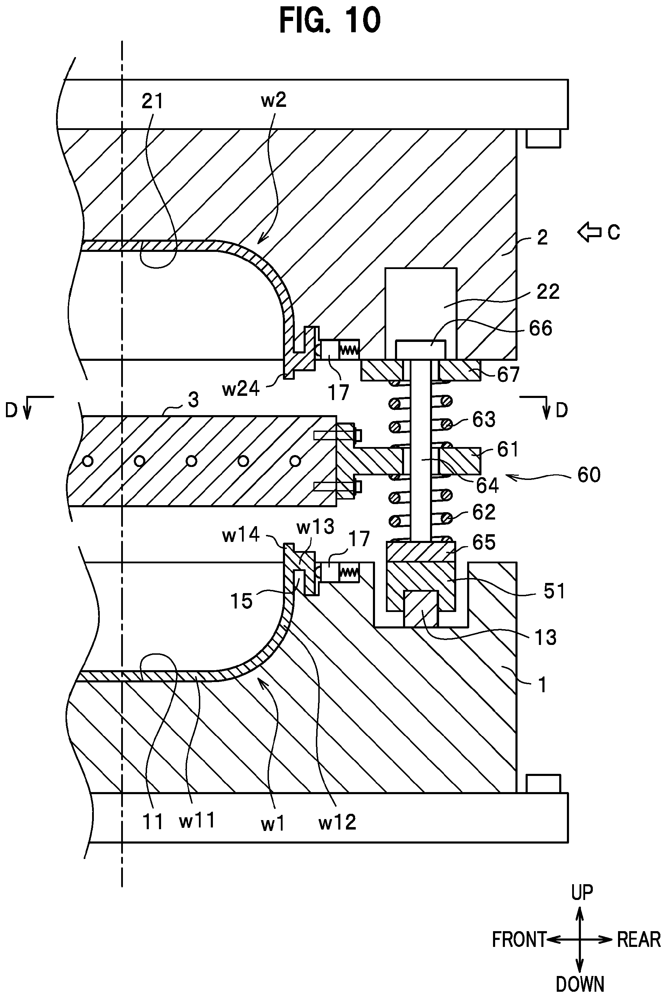

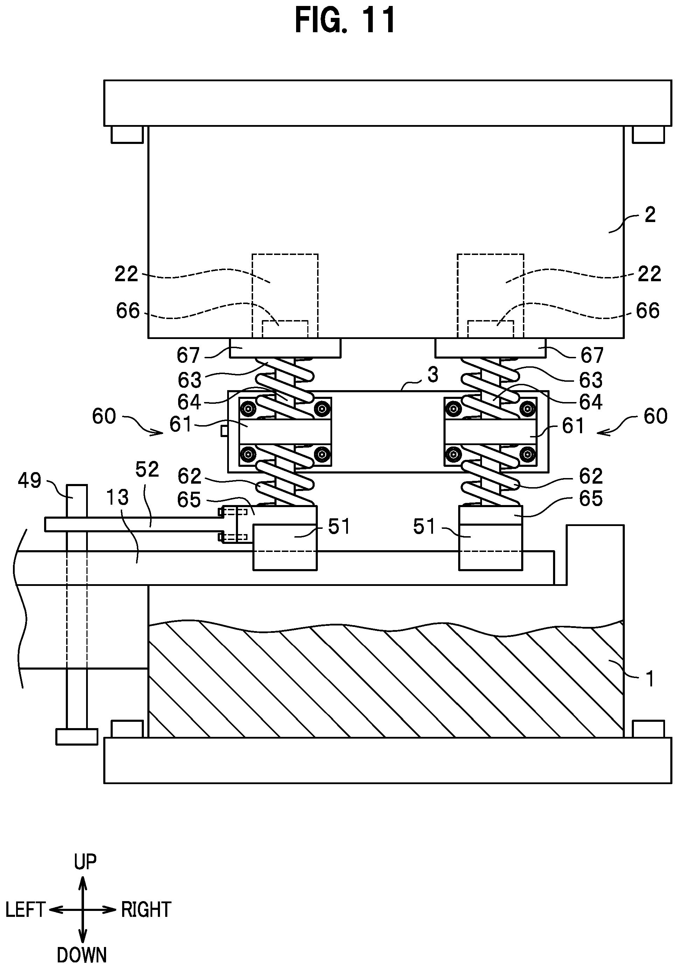

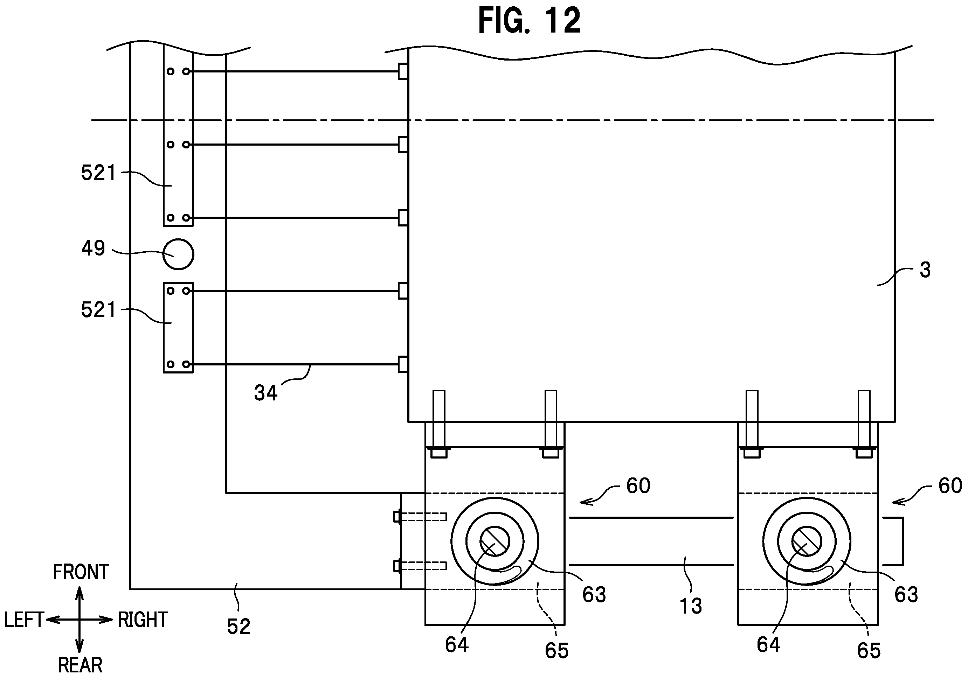

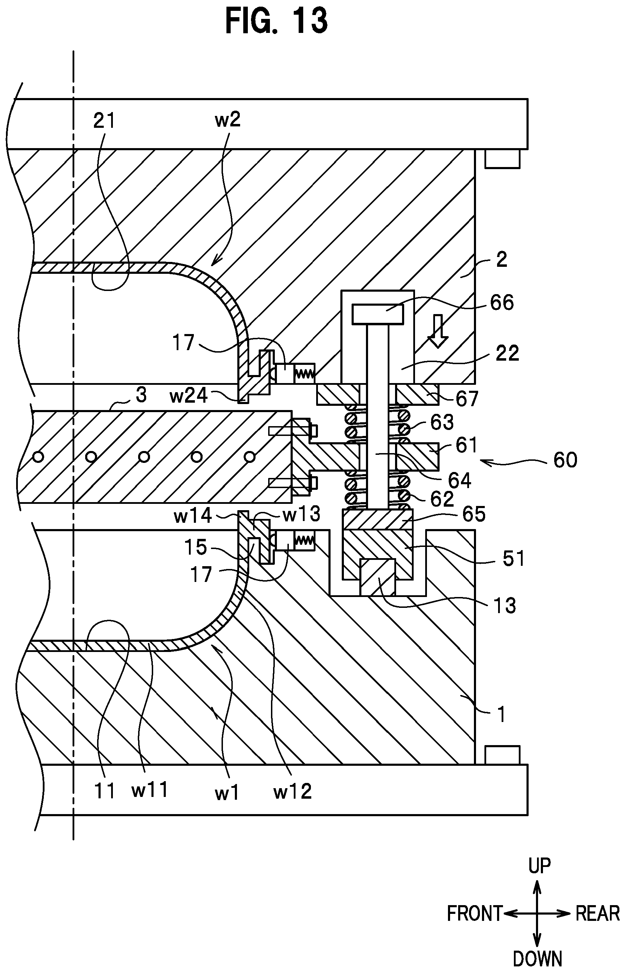

A description is given of a hollow container manufacturing apparatus according to a fourth embodiment, with reference to FIGS. 10 to 21. FIG. 10 is a side view of a spring-type centering mechanism in the fourth embodiment. FIG. 11 is a rear view of the centering mechanism in FIG. 10, as viewed from a direction C. FIG. 12 is a plan view of the centering mechanism in FIG. 10, as viewed from along an arrowed line D-D. FIG. 13 illustrates demonstration of the spring-type centering mechanism.

### [First Configuration]

FIGS. 10 to 13 each show the heating unit 3 moved so as to be placed between the fixed molding die 1 and movable molding die 2, and FIG. 10 is a sectional view. The fourth embodiment is described as the heating unit 3 is of a contact type in a plate shape, but the heating unit 3 may be of a non-contact type such as an IR heater.

A hollow container manufacturing apparatus 100 of the fourth embodiment includes a centering mechanism 60. The four centering mechanisms 60 are provided in total on the outsides in the front-rear direction of the heating unit 3, and only those on one of the outsides is illustrated in FIGS. 10 to 13. As the centering mechanisms 60 each have the same function, only one thereof is described below. Note that it is desirable that at least the two centering mechanisms 60 are provided, more preferably at least the three centering mechanisms 60 or at least the four centering mechanisms 60.

The centering mechanism 60 includes a middle plate 61, a first spring 62, a second spring 63, a shaft 64, a lower shaft end 65, an upper shaft end 66, and a spacer 67.

The middle plate 61 is a plate-like body projecting outward from a side surface of the heating unit 3. The middle plate 61 is attached to the side surface of the heating unit 3 by screwing or the like.

The first spring 62 is a force-exerting means to exert a force on the middle plate 61. The first spring 62 is interposed between the middle plate 61 and the fixed molding die 1, more specifically arranged so as to abut on an upper surface of the lower shaft end 65 and a lower surface of the middle plate 61.

The second spring 63 is a force-exerting means to exert a force on the middle plate 61. The second spring 63 is interposed between the middle plate 61 and the movable molding die 2, more specifically arranged so as to abut on an upper surface of the middle plate 61 and a lower surface of the spacer 67. A spring constant of the first spring 62 is the same as that of the second spring 63. A dimension of the first spring 62 is also the same as that of the second spring 63.

The shaft 64 is a rod-shaped body inserted through a hollow portion of the first spring 62, a hole penetrating, in a through-thickness direction of, the middle plate 61, a hollow portion of the second spring 63, and a hole penetrating, in a through-thickness direction of, the spacer 67.

The lower shaft end 65 is a lower end of the shaft 64 and abuts on the first spring 62. The lower shaft end 65 is placed on the slide block 51. As shown in FIG. 11, the lower shaft end 65 on the left has an L-shape, as viewed from rear, and has an end of a driving stay 52 attached to a side surface thereof by screwing or the like. In contrast, the lower shaft end 65 on the right has a plate shape.

The driving stay 52 is a reinforcing member for the centering mechanism 60. The driving stay 52 has a U shape in planar view (partially not shown), as shown in FIG. 12. Ends in a longitudinal direction of the driving stay 52 are each attached to the side surface of the lower shaft end 65 of the centering mechanism 60 by screwing or the like. In addition, the driving stay 52 includes a hole through which the guide rod 49 is inserted. Accordingly, the heating unit 3, having the driving stay 52 attached thereto via the centering mechanism 60, is moved by the drive mechanism 4 so as to be placed, and moved back from, between the molding dies. That is, the drive mechanism 4 of the first embodiment is applicable to the fourth embodiment.

Further, the driving stay 52 is provided, on an upper surface thereof, with one or more terminal blocks 521. Two or more heater wires 34 connect the one or more terminal blocks 521 with terminals of the heating unit 3, to supply power to the heating unit 3.

The movable molding die 2 is provided, in the opposing surface (lower surface), with holes 22, as shown in FIGS. 10 and 11. The upper shaft end 66 is an upper end of the shaft 64 and works as a locking part to lock the spacer 67 on which the second spring 63 exerts a force. The upper shaft end 66 is smaller in diameter than the hole 22 and is arranged within the hole 22. The spacer 67 is a member to abut on the second spring 63. The spacer 67 is larger in diameter than hole 22. An amount of the heating unit 3, having the middle plate 61 attached thereto, being moved downward is always half an amount of the movable molding die 2 being moved downward.

### [Operation]

The heating unit 3 and the centering mechanisms 60 are moved by the driving mechanism 4 so as to be placed between the fixed molding die 1 and movable molding die 2. Upon completion of the movement, the holes 22 of the movable molding die 2 are positioned above the centering mechanism 60. Once the molding dies start being closed, the movable molding die 2 comes close to the fixed molding die 1. As shown in FIG. 10, peripheral edges of the holes 22 of the surface of the movable molding die 2 facing the fixed molding die 1 abut on the upper surfaces of the spacers 67. At this time, the upper shaft ends 66 are located inside the holes 22. As the movable molding die 2 comes closer to the fixed molding die 1, the peripheral edges of the holes 22 press the spacers 67 downward, as shown in FIG. 13. This causes the first springs 62 and second springs 63 to contract to move the middle plates 61 downward.

The spring constant of the first spring 62 is the same as that of the second spring 63. Accordingly, during the movable molding die 2 first abutting on the spacers 67 and then being moved to the lowermost position, a distance between the upper surface of the middle plate 61 and the lower surface of the spacer 67 becomes the same as a distance between the lower surface of the middle plate 61 and the upper surface of the lower shaft end 65. In addition, a distance between the opposing surface of the movable molding die 2 and the upper surface of the heating unit 3 becomes the same as a distance between the opposing surface of the fixed molding die 1 and the lower surface of the heating unit 3. Further, a distance between the welded portion w24 of the workpiece w2 set in the cavity 21 of the movable molding die 2 and the upper surface of the heating unit 3 becomes the same as a distance between the welded portion w14 of the workpiece w1 set in the cavity 11 of the fixed molding die 1 and the lower surface of the heating unit 3.

Conventionally, in a case where a non-contact type heating unit is used, for example, distances between the heating unit and the fixed and movable molding dies have been adjusted (primarily height adjustment) after the heating unit has been interposed between the fixed and movable molding dies. If this adjustment ends up uneven, the thermal welding of the workpieces to each other is unevenly executed to negatively affect welding strength. However, this adjustment is not easy, requires skill, and takes a long time.

In contrast, according to the hollow container manufacturing apparatus 100 of the fourth embodiment, the four centering mechanisms 60 makes the distance between the heating unit 3 and fixed molding die 1 equal to the distance between the heating unit 3 and movable molding die 2, after the heating unit 3 has been placed between the fixed molding die 1 and movable molding die 2. The thermal contact resistance between the heating unit 3 and the workpieces changes according to a compressing force, yet this method brings the heating unit 3 into contact with the workpieces w1 and w2 together with the same compressing forces. Accordingly, the ends of the pair of workpieces w1 and w2 are heated evenly and reliably. This eliminates or reduces uneven heating, to increase welding strength. In addition, adjustment of aligning the heating unit 3 itself is not required, to shorten working time. Further, as the centering mechanism 60 is configured with springs, such a mechanism is readily configured that heats the ends of the pair of workpieces w1 and w2 uniformly and reliably.

The centering mechanism 60 alone makes the distance between the heating unit 3 and fixed molding die 1 equal to the distance between the heating unit 3 and movable molding die 2, but if the workpieces w1 and/or w2 come(s) off the cavity(ies) 11 and/or 21, heating temperature varies during heating. Then, installing the holding mechanism 17 as shown in FIG. 13, for example, prevents the workpieces w1 and w2 from coming off the fixed molding die 1 and movable molding die 2, to make the distances between the workpieces w1 and w2 and the heating unit 3 equal to each other. In other words, using the holding mechanism 16 or 17 and the centering mechanism 60 in combination synergistically enhances accuracy of adjusting distances.

### [Second Configuration]

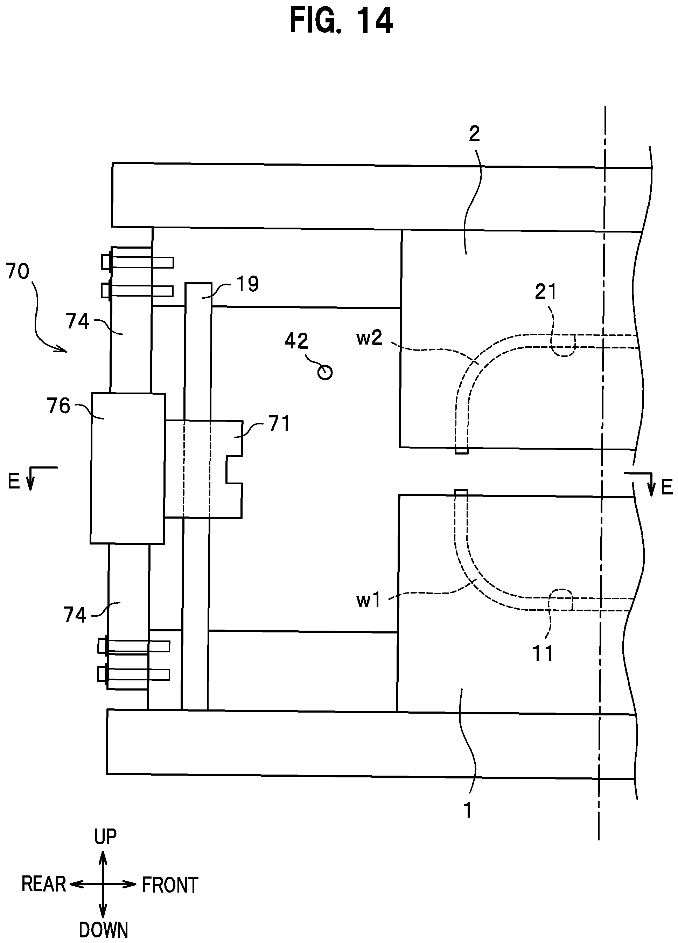

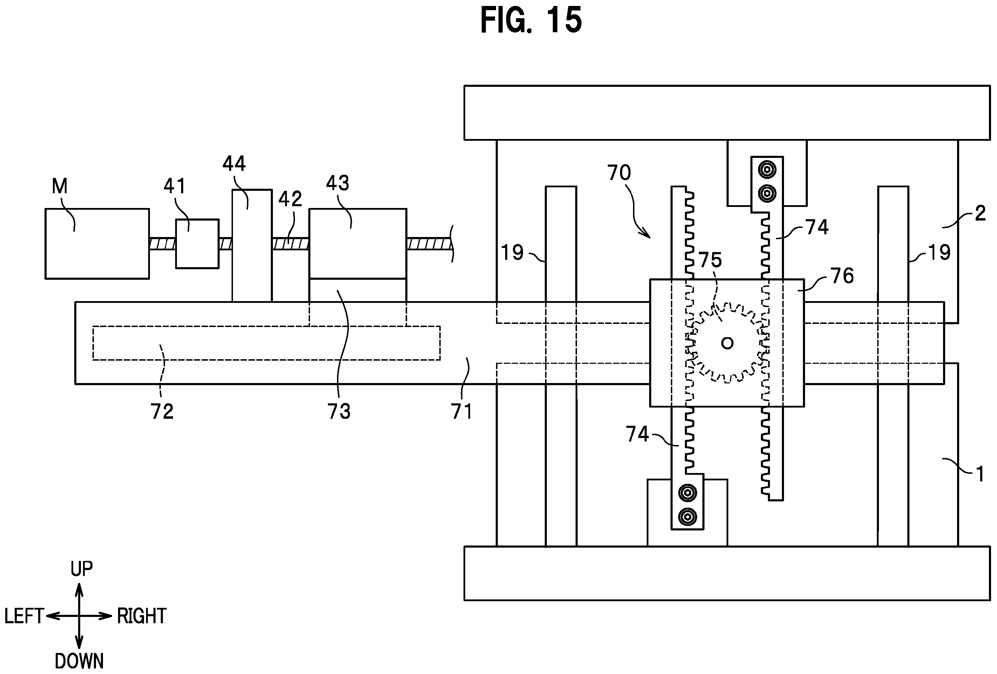

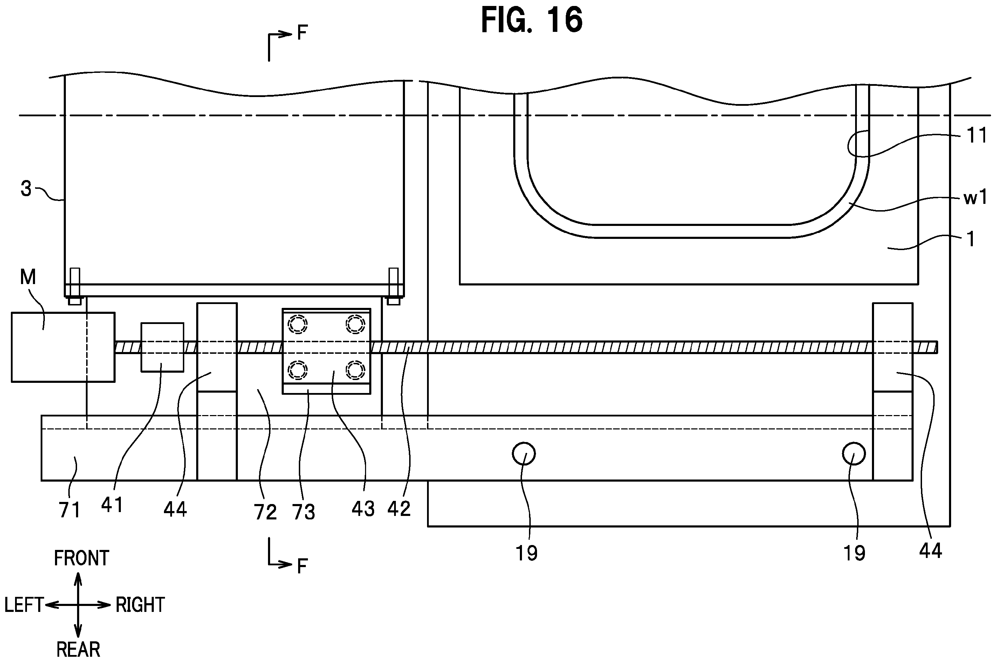

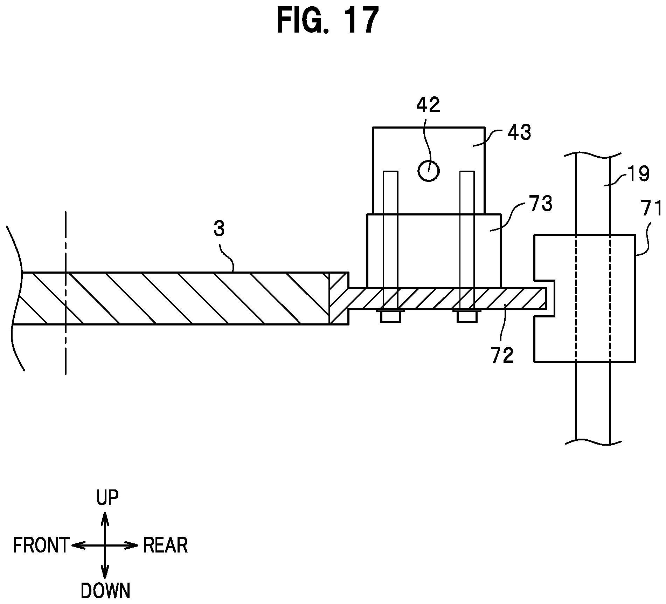

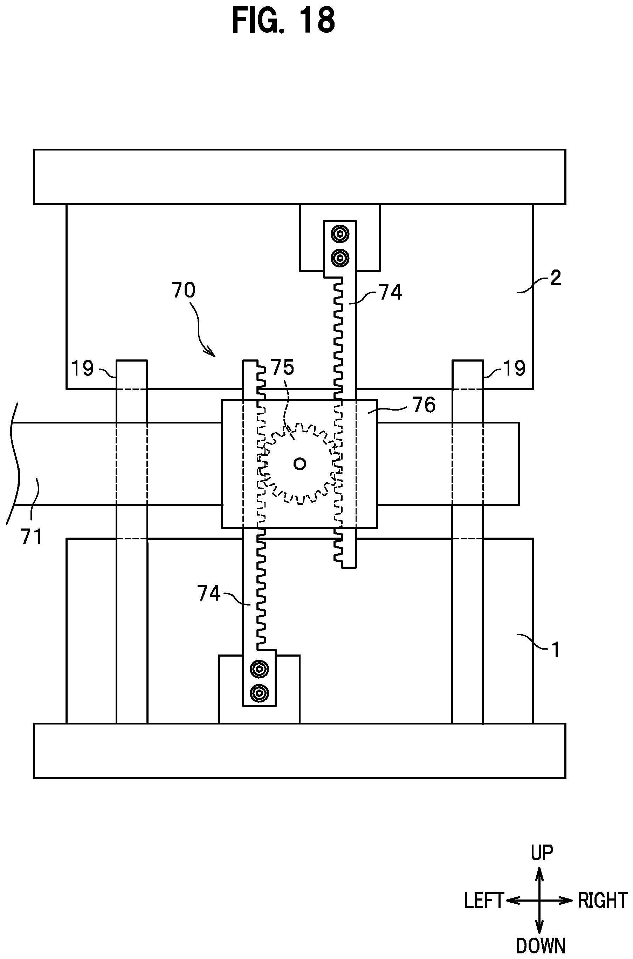

A description is given of a hollow container manufacturing apparatus according to another working example of the fourth embodiment, with reference to FIGS. 14 to 18. FIG. 14 is a side view of a rack-and-pinion type centering mechanism in the fourth embodiment. FIG. 15 is a rear view of the rack-and-pinion type centering mechanism in FIG. 14. FIG. 16 is a plan view of the centering mechanism in FIG. 14, as viewed from along an arrowed line E-E. FIG. 17 is a cross-sectional view of the centering mechanism in FIG. 16, taken along an arrowed line F-F. FIG. 18 is a side view of the centering mechanism in FIG. 14, with the molding dies opened.

The hollow container manufacturing apparatus 100 according to another working example of the fourth embodiment includes a centering mechanism 70. The centering mechanisms 70 are provided on the outsides in the front-rear direction of the heating unit 3, and only one of those is shown in FIGS. 14 to 18. The centering mechanisms 70 on the outsides in the front-rear direction have the same function as each other, and thus only one of those is described below.

The centering mechanism 70 includes a guide rail (centering guide rail) 71, a guide plate 72, a connecting block 73, racks 74, a gear 75, and a gear box 76. Additionally, the centering mechanism 70 is provided therefor with the motor M of the drive mechanism 4, the coupling 41, the ball screw 42, the ball screw nut 43, and the bearing cases 44, all of which are already described.

The guide rail 71 is an incised part extending in the right-left direction and having a groove in a surface thereof to face the heating unit 3. A part of the guide rail 71 extends over the entire dimension in the right-left direction of the fixed molding die 1 and movable molding die 2, and the rest extends leftward from the left side surfaces of the fixed molding die 1 and movable molding die 2 by a predetermined amount. The guide rail 71 is a member to guide the heating unit 3 being moved. The ball screw 42 extends in the right-left direction, as shown in FIG. 15, with a right end extending within an inch of a right end of the guide rail 71 and a left end extending within an inch of a left end of the guide rail 71.

As shown in FIG. 15, the fixed molding die 1 is provided, at the four corners thereof, with guide pins 19 standing in the up-down direction. The guide rail 71 has holes penetrating therethrough in the up-down direction to have the guide pins 19 inserted therein. The guide rail 71 is guided by the guide pins 19 so as to be moved in the up-down direction.

The guide plate 72 is a plate-like body projecting outward from the side surface of the heating unit 3. As shown in FIG. 16, the guide plate 72 is attached to the side surface of the heating unit 3 by screwing or the like. One side of the guide plate 72 opposite to the heating unit 3 is fitted into the groove in the guide rail 71 (see FIG. 17).

The connection block 73 is a member coupled to the guide plate 72 and the ball screw nut 43. The guide plate 72 and the heating unit 3, to which the guide plate 72 is attached, are thus moved according to the ball screw nut 43 being moved.

The racks 74 are each a member having a toothed flat plate shape and extending in the up-down direction. The racks 74 are respectively attached to the fixed molding die 1 and movable molding die 2. The gear 75 meshes with the racks 74. The gearbox 76 accommodates the gear 75 and portions of the racks 74. The gearbox 76 is attached to a surface of the guide rail 71 opposite to the heating unit 3. An amount of the heating unit 3, to which the guide plate 72 is attached, being moved downward is always half an amount of the movable molding die 2 being moved downward.

### [Operation]

As shown in FIG. 18, the racks 74 are in mesh with the gear 75 at near-distal ends thereof, when the molding dies are open, to have the fixed molding die 1 the most far away from the movable molding die 2. In this condition, the workpieces w1 and w2 are set in the fixed molding die 1 and movable molding die 2, respectively, even though not shown. The guide plate 72 is then moved rightward by the drive mechanism 4, along the groove in the guide rail 71, toward the fixed molding die 1 and movable molding die 2 which are open. This causes the heating unit 3, to which the guide plate 72 is attached, to be moved so as to be placed between the fixed molding die 1 and movable molding die 2.

Once the molding dies start being closed after the heating unit 3 has been moved, as shown in FIG. 15, the movable molding die 2 comes closer to the fixed molding die 1. Then, the racks 74 rotate the gear 75 to move the gear box 76, accommodating the gear 75, downward. Accordingly, the guide rail 71 attached to the gear box 76 is moved downward, so that the guide plate 72 fitted into the guide rail 71 and the heating unit 3, to which the guide plate 72 is attached, are moved downward.

As with the spring-type centering mechanism 60, the distance between the opposing surface of the movable molding die 2 and the upper surface of the heating unit 3 is equal to the distance between the opposing surface of the fixed molding die 1 and the lower surface of the heating unit 3, while the movable molding die 2 is being moved to the lowest position due to the molding dies being closed. Likewise, the distance between the welded portion w24 of the workpiece w2 set in the cavity 21 of the movable molding die 2 and the upper surface of the heating unit 3 is equal to the distance between the welded portion w14 of the workpiece w1 set in the cavity 11 of the fixed molding die 1 and the lower surface of the heating unit 3.

An effect of the hollow container manufacturing apparatus 100 using the rack-and-pinion type centering mechanism 70 is the same as the effect of the hollow container manufacturing apparatus 100 using the spring-type centering mechanism 60, and thus is not described.

### [Third Configuration]

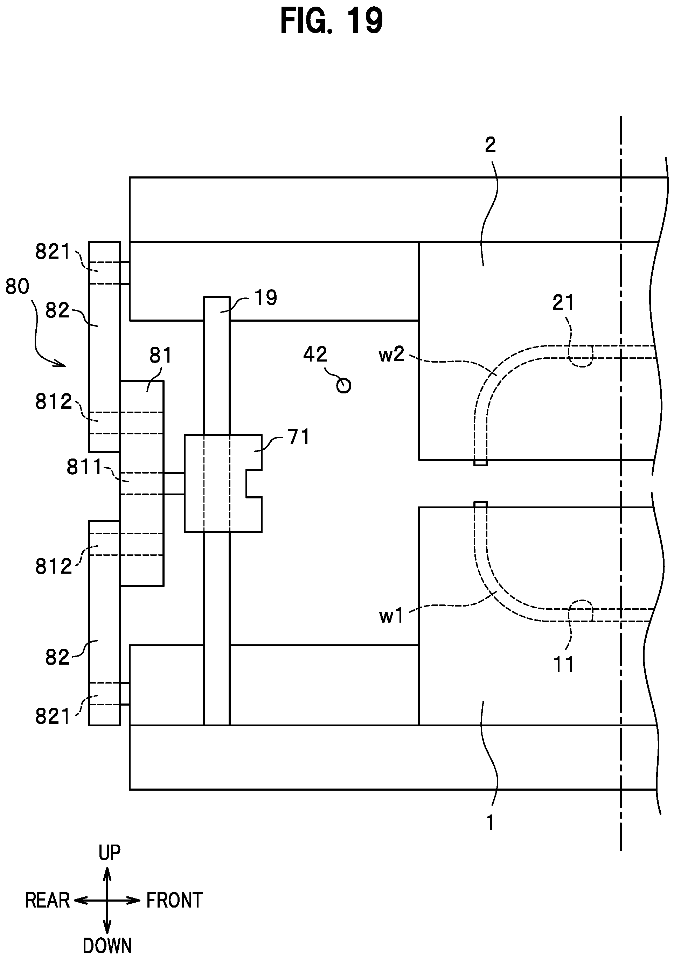

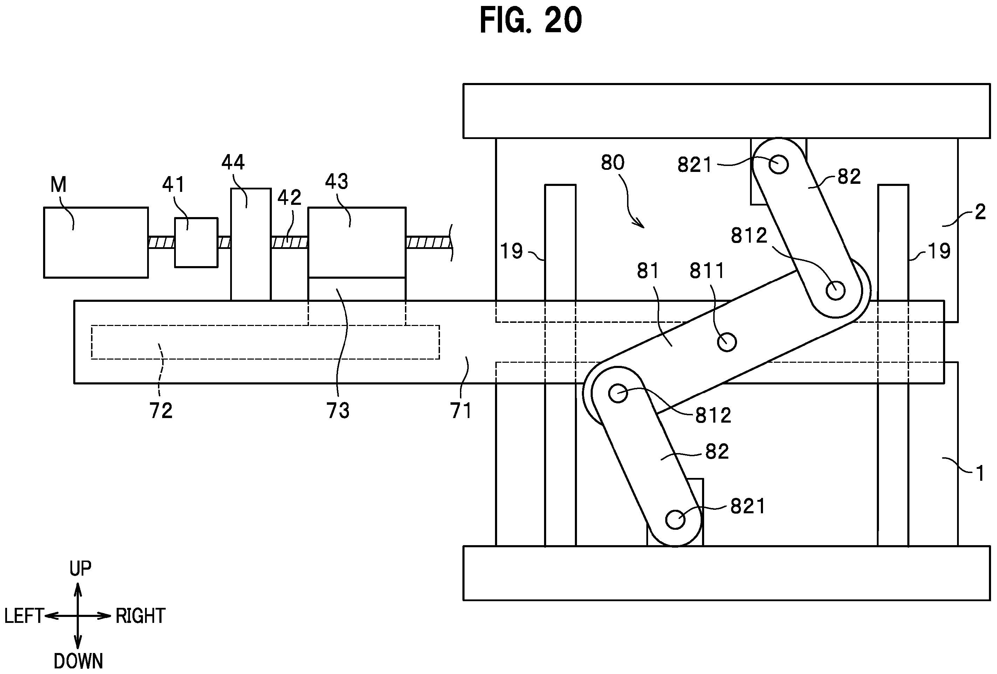

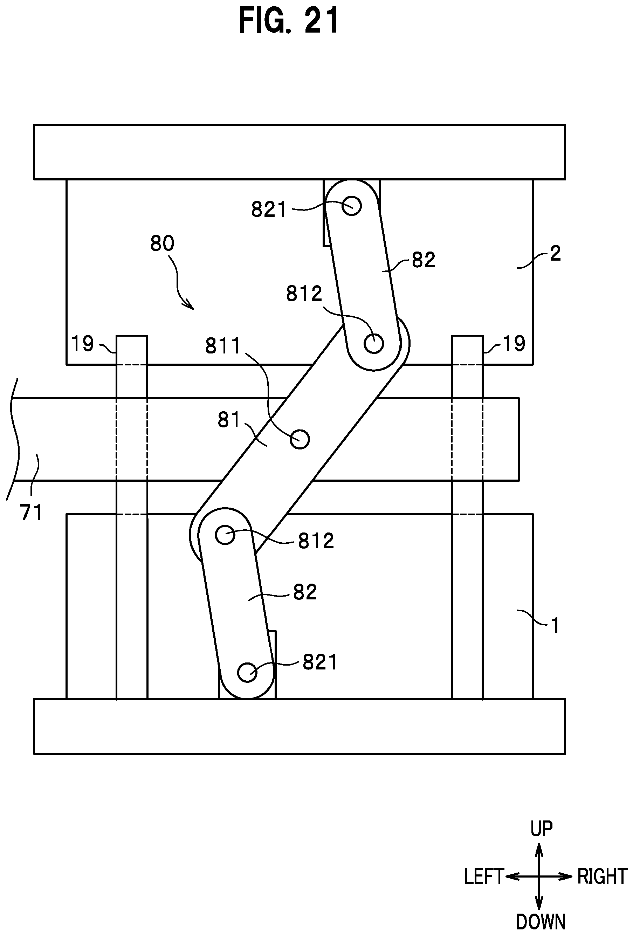

A description is given of a hollow container manufacturing apparatus according to still another working example of the fourth embodiment, with reference to FIGS. 19 to 21. FIG. 19 is a side view of a link type centering mechanism in the fourth embodiment. FIG. 20 is a rear view of the link type centering mechanism in FIG. 19. FIG. 21 is a rear view of the link type centering mechanism in FIG. 19, with the molding dies opened.

The hollow container manufacturing apparatus 100 according to still another working example of the fourth embodiment includes a centering mechanism 80. The centering mechanisms 80 are provided on the outsides in the front-rear direction of the heating unit 3, and only one of those is shown in FIGS. 19 to 21. The centering mechanisms 80 on the outsides in the front and rear direction have the same function as each other, and thus only one of those is described below.

The centering mechanism 80 includes the guide rail 71, the guide plate 72, the connecting block 73, a long link (first link) 81, and short links (second links) 82. The guide rail 71, guide plate 72, and connecting block 73 are the same as those already described. Additionally, the centering mechanism 80 is provided therefor with the motor M of the drive mechanism 4, the coupling 41, the ball screw 42, the ball screw nut 43, and the bearing cases 44, all of which are already described.

The long link 81 is a plate-like body and is arranged on a surface of the guide rail 71 opposite to the heating unit 3. The long link 81 is, at the center thereof, rotatably fixed to the guide rail 71 by a pin 811. Both ends of the long link 81 are respectively fixed to first ends of the short links 82 by pins 812 so as to be rotatable and movable with respect to the fixed molding die 1 and movable molding die 2.

The short links 82 are plate-like bodies coupled to the long link 81. Second ends of the short links 82 are rotatably attached to side surfaces of the fixed molding die 1 and movable molding die 2, respectively, by pins 821. The lengths of the short links 82 are equal to each other. An amount of the heating unit 3, to which the guide plate 72 is attached, being moved downward is always half an amount of the movable molding die 2 being moved downward. Note that the long link 81 (first link 81) is longer than the short link 82 (second link 82) in the present embodiment, but the lengths may be suitably set according to an opening/closing stroke of the molding dies.

### [Operation]

As shown in FIG. 21, the long link 81 and the short links 82 are the most extended to have the fixed molding die 1 the most far away from the movable molding die 2, when the molding dies are open. In this condition, the workpieces w1 and w2 are set in the fixed molding die 1 and movable molding die 2, respectively, even though not shown. The guide plate 72 is then moved rightward by the drive mechanism 4, along the groove in the guide rail 71, toward the fixed molding die 1 and movable molding die 2 which are open. This causes the heating unit 3, to which the guide plate 72 is attached, to be moved so as to be placed between the fixed molding die 1 and movable molding die 2.

Once the molding dies start being closed after the heating unit has been moved, as shown in FIG. 20, the movable molding die 2 comes closer to the fixed molding die 1. Then, an angle between the long link 81 and each of the short links 82 becomes smaller to have the short links 82 coming closer to each other, to move the long link 81 downward. The guide rail 71 attached to the long link 81 is moved downward to move the guide plate 72, fitted to the guide rail 71, and the heating unit 3, to which the guide plate 72 is attached, downward.

As with the spring-type centering mechanism 60 and the rack-and-pinion type centering mechanism 70, the distance between the opposing surface of the movable molding die 2 and the upper surface of the heating unit 3 is equal to the distance between the opposing surface of the fixed molding die 1 and the lower surface of the heating unit 3, while the movable molding die 2 is being moved to the lowest position due to the molding dies being closed. Likewise, the distance between the welded portion w24 of the workpiece w2 set in the cavity 21 of the movable molding die 2 and the upper surface of the heating unit 3 is equal to the distance between the welded portion w14 of the workpiece w1 set in the cavity 11 of the fixed molding die 1 and the lower surface of the heating unit3.

An effect of the hollow container manufacturing apparatus 100 using the link type centering mechanism 80 is the same as the effect of the hollow container manufacturing apparatus 100 using the spring-type centering mechanism 60 or the rack-and-pinion type centering mechanism 70, and thus is not described.

### Fifth Embodiment

A description is given of a hollow container manufacturing apparatus according to a fifth embodiment, primarily with reference to FIG. 3 (see other drawings as required). The fifth embodiment relates to the heating unit 3 and protective frame 31, which have already been described. The heating unit 3 of the fifth embodiment is a non-contact type IR heater, for instance.

As shown in FIG. 3, the heating unit 3 has a substantially ring shape in planar view, and is formed so as to correspond to shapes of the welded portions of the workpieces w1 and w2. Both ends of the heating unit 3 extend leftward from a left side of the substantially ring portion of the heating unit 3 and run through holes formed in the holding portion 311 of the protective frame 31. Both ends of the heating unit 3 are connected with heater wires (not shown) for supplying electric power to the heating unit 3. Note that the structure may include a terminal block on the plate 50, to have the heater wires connected to the terminal block.

The protective frame 31 (dotted portion in FIG. 3) surrounds the heating unit 3 and is formed to be slightly larger than the workpieces w1 and w2, and is thicker in the up-down direction than the heating unit 3. The protective frame 31 includes the holding portion 311. The holding portion 311 is at the center in the left side of the protective frame 31. The holding portion 311 has holes, through which both ends of the heating unit 3 run, to hold the heating unit 3 to the protective frame 31. In addition, the protective frame 31 has a right end of the plate 50 arranged on an upper surface of the left side thereof and attached by screwing or the like (see also FIG. 1). Further, the protective frame 31 has the four slide blocks 51 attached to a lower surface thereof by screwing or the like (see also FIG. 1).

### [Operation]

The heating unit 3 and protective frame 31 are moved by the drive mechanism 4 so as to be placed between the fixed molding die 1 and movable molding die 2, which are opened. The thickness of the protective frame 31 is larger than that of the heating unit 3. The protective frame 31 is moved back and forth with respect to the fixed molding die 1, together with the heating unit 3, along the guide rails 13. This reliably prevents the heating unit 3, moved so as to be placed between the fixed molding die 1 and movable molding die 2, from contacting the fixed molding die 1 and/or movable molding die 2. As a result, the heating unit 3 is prevented from being damaged due to contact with the fixed molding die 1, movable molding die 2, and/or workpieces w1 and/or w2. If the protective frame 31 comes into contact with the fixed molding die 1, movable molding die 2, or workpieces w1 and/or w2, operation may be stopped by detecting a change in torque of the motor, for example, to reliably protect the heating unit 3. Note that it is preferable to suitably design the protective frame 31 so that the heating unit 3, moved so as to be placed between the fixed molding die 1 and movable molding die 2, comes into contact with none of the fixed molding die 1 and movable molding die 2.

Conventionally, such a mechanism has not been provided that protects a heating unit such as an IR heater. Accordingly, distances between the heating unit and the molding dies have been intentionally kept large, when the molding dies are closed, to avoid the heating unit from coming into contact with the molding dies. However, this method has had a problem that heating efficiency is degraded because the heating unit fails to be brought close to workpieces. In view of shortening the heating time and welding performance through heating of the workpieces, it is preferable to bring the heating unit as close to the workpieces as possible.

In contrast, according to the hollow container manufacturing apparatus 100 of the fifth embodiment, the protective frame 31 is used to prevent the heating unit 3 from coming into contact with the fixed molding die 1 and movable molding die 2, and to allow the heating unit 3 to be readily brought close to the workpieces w1 and w2. Accordingly, the heating time is shortened, and efficiency of heating the workpieces is improved. In addition, as the fixed molding die 1 and movable molding die 2 are brought close to each other, a time is shortened after the heating unit 3 has been moved back until the molding dies are closed. This prevents the temperature of the workpieces from decreasing, to promise improving welding quality of the welded portion.

Further, according to the hollow container manufacturing apparatus 100 of the fifth embodiment, the protective frame 31 has the four slide blocks 51 attached to the front and rear portions thereof. This allows the protective frame 31 to be moved back and forth on the guide rails 13, to prevent the heating unit 3 from being vibrated. If the heating unit 3 were vibrated, not only alignment in a height direction becomes difficult, but also the heating unit 3 may be reduced in durability to have a lifetime thereof shortened. However, according to the hollow container manufacturing apparatus 100 of the fifth embodiment, the heating unit 3 is substantially free from vibration, to facilitate alignment in the height direction and prevent the heating unit 3 from being reduced in durability to have a lifetime of the heating unit 3 extended.

### Modifications

a) In the first embodiment, the height of the drive mechanism 4 may be set to be equal to the height of the guide rails 13. In particular, the drive mechanism 4 may be arranged between the guide rails 13, to shorten lengths in the axial dimension of the guide rods 49. Additionally, only the single guide rod 49 may be provided in the drive mechanism 4.
b) In the first embodiment, the heating unit 3 is not limited to a non-contact type, and may be a contact type. In the case of the contact type, the heating unit 3 may have a plate shape, for example.
c) In the first embodiment, the guide rails 13 may be partly provided in the movable molding die 2. That is, the guide rails 13 may be partly provided in the opposing surface of the movable molding die to face the fixed molding die 1.
d) In the first to fifth embodiments, the fixed molding die 1 and movable molding die 2 are not limited to those vertically moved and may be those horizontally moved. That is, the heating unit 3 may be moved back and forth in the up-down direction (vertical direction). Additionally, the embodiments have been described above for a case where the primary molding and secondary molding use different sets of molding dies from each other, as an example, with the present invention used as molding dies for the secondary molding, but the present invention is not limited thereto. The present invention may also be applied to molding dies used for both the primary molding and secondary molding.
e) An interlock mechanism may be introduced to the holding mechanism 16 of the second embodiment. That is, operation may be controlled so as not to proceed to the next phase until the partial core 161 of the holding mechanism 16 is moved to a predetermined position by the cylinder 162.
f) In the second embodiment, the front end of the pressing part 171 of the holding mechanism 17 in FIGS. 6A and 6B has a hemispherical shape, but may be formed into a saw blade shape. In this case, making an orientation of the saw blade aligned with directions of the workpieces w1 and w2 being set in the cavities 11 and 21, respectively, allows for smoothly setting the workpieces w1 and w2. Additionally, having the saw blade shape allows for reliably holding the workpieces w1 and w2.
g) In the holding mechanism 17 of the second embodiment, the force-exerting means 172 has been described to exert a force from outside to the peripheral wall portion w12 of the workpiece w1. However, a force is not limited to be exerted to the peripheral wall portion w12 and may be exerted from outside to the flange portion w13, for example. More generally, a force may be exerted from outside to a side surface of the workpiece w1.
h) Both of the holding mechanisms 16 and 17 of the second embodiment may be used in combination.
i) In the second embodiment, the heating unit 3 is not limited to of a non-contact type, and may be of a contact type. In the case of the contact type, the unit may have a plate shape, for example.
j) The holding mechanisms 16 and 17 of the second embodiment may hold the workpieces w1 and w2 having no flange portions. In other words, the holding mechanisms 16 and 17 may press portions of the workpieces w1 and w2, each having at least a bottom portion and peripheral wall portion rising from the bottom portion, against the fixed molding die 1 and movable molding die 2, respectively.
k) The holding mechanisms 16 and 17 of the second embodiment may be used to press the workpieces w1 and w2 set in (or in) the cavities of the molding dies against the molding dies, regardless of a type of molding die. That is, the holding mechanisms 16 and 17 may be used to press portions of the workpieces w1 and w2 against the fixed molding die 1 and movable molding die 2, respectively, in which the workpieces w1 and w2 formed by primary molding have been removed and then set in the cavities 11 and 21 of the fixed molding die 1 and movable molding die 2 for secondary molding, respectively, as in the second embodiment. Alternatively, the holding mechanisms 16 and 17 may be used, with molding dies used for secondary molding as well without workpieces molded by primary molding being removed, to press the workpieces in cavities of the molding dies.
l) The heating unit 3 of the third embodiment may not have a plate shape. For example, the heating unit 3 may have a three-dimensional curved shape.
m) The centering mechanisms 60, 70, and 80 of the fourth embodiment have been described to have a both-ends-supported structure to support, from the outsides in the front-rear direction of, the heating unit 3, but may have a cantilever structure to support, from either one of the outsides in the front-rear direction of, the heating unit 3.
n) In the spring-type centering mechanism 60 of the fourth embodiment, the ratio of the spring constant of the first spring 62 to the spring constant of the second spring 63 may be changed to change an amount of the heating unit 3 being moved with respect to an amount of the movable molding die 2 being moved.
o) The centering mechanisms 70 and 80 of the fourth embodiment may have the guide rails 71 formed to be ridges, slide blocks slidable on the ridges, and the slide blocks attached to the heating unit 3, to move the heating unit 3.
p) The protective frame 31 of the fifth embodiment may have a thickness in the up-down direction equal to or smaller than that of the heating unit 3. In other words, the protective frame 31 may have any shape at least to surround the heating unit 3. Even with such a shape, the protective frame 31 is moved back and forth on the guide rails 13, with the heating unit 3 placed thereon.
q) The features of the invention described in the embodiments may be combined as required.

### LEGEND FOR REFERENCE NUMERALS

100: hollow container manufacturing apparatus, 1: fixed molding die, 2: movable molding die, 3: heating unit, 4: drive mechanism, 11: cavity, 12: groove, 13: guide rail (guide rail for moving heating unit), 14: bracket, 15: peripheral edge, 151: first peripheral edge, 152: second peripheral edge, 16: holding mechanism, 161: partial core, 162: cylinder, 17: holding mechanism, 171: pressing part, 172: force-exerting means, 173: base part, 18: first communication hole, 19: guide pin, 21: cavity, 22: hole, 31: protective frame, 311: holding portion, 32: second communication hole, 33: third communication hole (heating unit communication hole), 41: coupling, 42: ball screw, 43: ball screw nut, 44: bearing case, 45: plate, 46: bracket, 47: guide rail, 48: slide block, 49: guide rod, 50: plate, 51: slide block, 52: driving stay, 521: terminal block, 60: centering mechanism, 61: middle plate, 62: first spring, 63: second spring, 64: shaft, 65: lower shaft end, 66: upper shaft end, 67: spacer, 70: centering mechanism, 71: guide rail (centering guide rail), 72: guide plate, 73: connecting block, 74: rack, 75: gear, 76: gear box, 80: centering mechanism, 81: long link (first link), 82: short link (second link), 811; 812; 821: pin, w1; w2: workpiece, w11: bottom portion, w12: peripheral wall portion, w13: flange portion, w131: first flange portion, w132: second flange portion, w14; w24: welded portion, and M: motor.

## Claims

1. A hollow container manufacturing apparatus (100) comprising:
a fixed molding die (1) having a cavity (11);
a movable molding die (2) having a cavity (21) and moved in a direction of coming closer to or away from the fixed molding die;
a heating unit (3) to be placed between the fixed molding die and movable molding die to heat a pair of workpieces (w1 , w2) in the cavities (11, 21) of the fixed molding die and movable molding die;
guide rails (13) to move the heating unit; and
a drive mechanism (4) to move the heating unit back and forth with respect to the fixed molding die (1) or the movable molding die (2), along the guide rails (13),
wherein the pair of workpieces (w1 , w2) is heated by the heating unit (3) and then welded to each other,
and the apparatus (100) is **characterized in that**
the guide rails (13) to move the heating unit are partly arranged either in an opposing surface of the fixed molding die (1) to oppose the movable molding die (2) or in an opposing surface of the movable molding die to oppose the fixed molding die.

2. The hollow container manufacturing apparatus according to claim 1, wherein each of the pair of workpieces (w1 , w2) includes at least a bottom and a peripheral wall rising from the bottom, and
the apparatus (100) further includes holding mechanisms (16; 17) to partly press the pair of workpieces, in the respective cavities (11, 21) of the fixed molding die (1) and movable molding die (2), against the fixed molding die and movable molding die, respectively.

3. The hollow container manufacturing apparatus according to claim 2, wherein
the holding mechanisms (16) each have a cylinder (162) and a partial core (161) moved back and forth by the cylinder,
wherein the partial cores are moved forward by the cylinders to partly press the workpieces (w1, w2) against the fixed molding die (1) and movable molding die (2), respectively.

4. The hollow container manufacturing apparatus according to claim 2, wherein
the holding mechanisms (17) each include a force-exerting means (172) to exert a force from outside to a side surface of each of the workpieces (w1, w2), and a pressing part (171) provided at a front end of the force-exerting means,
wherein the workpieces are partly pressed against the fixed molding die (1) and movable molding die (2), respectively, by respective forces by the force-exerting means.

5. The hollow container manufacturing apparatus according to any one of claims 1 to 4, further comprising:
a centering mechanism (60; 70; 80) to make a distance between the heating unit (3) and the fixed molding die (1) equal to a distance between the heating unit and the movable molding die (2), after the heating unit has been placed between the fixed molding die and movable molding die.

6. The hollow container manufacturing apparatus according to claim 5, wherein the centering mechanism (60) includes:
a middle plate (61) projecting outside the heating unit (3);
a first spring (62) interposed between the middle plate and the fixed molding die (1); and
a second spring (63) interposed between the middle plate and the movable molding die (2) and having the same spring constant as the first spring.

7. The hollow container manufacturing apparatus according to claim 5, wherein the centering mechanism (70) includes:
a guide plate (72) projecting outside the heating unit (3);
a centering guide rail (71) to which the guide plate is fitted;
a pair of racks (74) attached to the fixed molding die (1) and movable molding die (2) and extending in a direction of the movable molding die being moved;
a gear (75) meshing with the pair of racks; and
a gear box (76) housing the gear and portions of the pair of racks and attached to the centering guide rail (71).

8. The hollow container manufacturing apparatus according to claim 5, wherein the centering mechanism (80) includes:
a guide plate (72) projecting outside the heating unit (3);
a centering guide rail (71) to which the guide plate is fitted;
a first link (81) whose center is rotatably fixed to the centering guide rail; and
a pair of second links (82) each having a first end rotatably fixed to each of ends of the first link and a second end rotatably attached to each of the fixed molding die (1) and movable molding die (2).

9. The hollow container manufacturing apparatus according to any one of claims 1 to 8, wherein in a case where the heating unit (3) is brought into contact with the pair of workpieces (w1, w2) during welding,
the fixed molding die (1) or movable molding die (2) includes a first communication hole (18) to communicate with outside, and
the heating unit includes a second communication hole (32) to communicate with the first communication hole.

10. The hollow container manufacturing apparatus according to any one of claims 1 to 8, wherein in a case where the heating unit (3) is brought into contact with the pair of workpieces (w1, w2) during welding,
the heating unit includes a heater communication hole (33) to let out air in the fixed molding die (1) and movable molding die (2).

11. The hollow container manufacturing apparatus according to any one of claims 1 to 8, wherein in a case where the heating unit (3) is not brought into contact with the pair of workpieces (w1, w2) during welding,
the heating unit has a protective frame (31) surrounding the heating unit,
wherein the protective frame is moved back and forth with respect to the fixed molding die (1), together with the heating unit and along the guide rails (13) used for moving the heating unit.

## Patentansprüche

1. Vorrichtung zur Herstellung von Hohlbehältern (100), umfassend:
eine feste Formgebungsmatrize (1), die einen Hohlraum (11) aufweist;
eine bewegliche Formgebungsmatrize (2), die einen Hohlraum (21) aufweist und in einer Annäherungs- und Entfernungsrichtung von der festen Formgebungsmatrize bewegt wird;
eine Heizeinheit (3), die zwischen der festen Formgebungsmatrize und der beweglichen Formgebungsmatrize zu platzieren ist, um ein Paar von Werkstücken (w1, w2) in den Hohlräumen (11, 21) der festen Formgebungsmatrize und beweglichen Formgebungsmatrize zu erhitzen; Führungsschienen (13) zum Bewegen der Heizeinheit; und
einen Antriebsmechanismus (4) zum Bewegen der Heizeinheit nach vorne und nach hinten in Bezug auf die feste Formgebungsmatrize (1) oder die bewegliche Formgebungsmatrize (2) entlang der Führungsschienen (13),
wobei das Paar von Werkstücken (w1, w2) durch die Heizeinheit (3) erhitzt wird und aneinandergeschweißt wird,
und die Vorrichtung (100) **dadurch gekennzeichnet ist, dass**
die Führungsschienen (13) zum Bewegen der Heizeinheit teilweise entweder in einer gegenüberliegenden Oberfläche der festen Formgebungsmatrize (1) angeordnet sind, um der beweglichen Formgebungsmatrize (2) gegenüberzuliegen, oder in einer gegenüberliegenden Oberfläche der beweglichen Formgebungsmatrize, um der festen Formgebungsmatrize gegenüberzuliegen.

2. Vorrichtung zur Herstellung von Hohlbehältern nach Anspruch 1, wobei jedes des Paars von Werkstücken (w1, w2) mindestens einen Boden und eine sich vom Boden erhebende Seitenwand einschließt, und
die Vorrichtung (100) weiter Haltemechanismen (16; 17) einschließt, um das Paar von Werkstücken in den jeweiligen Hohlräumen (11, 21) der festen Formgebungsmatrize (1) und beweglichen Formgebungsmatrize (2) teilweise gegen die feste Formgebungsmatrize bzw. bewegliche Formgebungsmatrize zu drücken.

3. Vorrichtung zur Herstellung von Hohlbehältern nach Anspruch 2, wobei
die Haltemechanismen (16) jeweils einen Zylinder (162) und einen Teilkern (161) aufweisen, der durch den Zylinder nach vorne und nach hinten bewegt wird,
wobei die Teilkerne durch die Zylinder vorwärts bewegt werden, um die Werkstücke (w1, w2) teilweise gegen die feste Formgebungsmatrize (1) bzw. die bewegliche Formgebungsmatrize (2) zu drücken.

4. Vorrichtung zur Herstellung von Hohlbehältern nach Anspruch 2, wobei
die Haltemechanismen (17) jeweils ein Kraftausübungsmittel (172) zum Ausüben einer Kraft von außen auf eine Seitenfläche jedes der Werkstücke (w1, w2) und ein Drückteil (171), das an einem Vorderende des Kraftausübungsmittels bereitgestellt ist, einschließen,
wobei die Werkstücke durch die jeweilige Kraft durch das Kraftausübungsmittel teilweise gegen die feste Formgebungsmatrize (1) bzw. die bewegliche Formgebungsmatrize (2) gedrückt werden.

5. Vorrichtung zur Herstellung von Hohlbehältern nach einem der Ansprüche 1 bis 4, weiter umfassend:
einen Zentrierungsmechanismus (60; 70; 80), um einen Abstand zwischen der Heizeinheit (3) und der festen Formgebungsmatrize (1) gleich einem Abstand zwischen der Heizeinheit und der beweglichen Formgebungsmatrize (2) zu machen, nachdem die Heizeinheit zwischen der festen Formgebungsmatrize und der beweglichen Formgebungsmatrize platziert wurde.

6. Vorrichtung zur Herstellung von Hohlbehältern nach Anspruch 5, wobei der Zentrierungsmechanismus (60) einschließt:
eine mittlere Platte (61), die außerhalb der Heizeinheit (3) vorragt;
eine erste Feder (62), die zwischen der mittleren Platte und der festen Formgebungsmatrize (1) eingefügt ist; und
eine zweite Feder (63), die zwischen der mittleren Platte und der beweglichen Formgebungsmatrize (2) eingefügt ist und die gleiche Federkonstante wie die erste Feder aufweist.

7. Vorrichtung zur Herstellung von Hohlbehältern nach Anspruch 5, wobei der Zentrierungsmechanismus (70) einschließt:
eine Führungsplatte (72), die außerhalb der Heizeinheit (3) vorragt;
eine Zentrierungsführungsschiene (71), an der die Führungsplatte angepasst ist;
ein Schienenpaar (74), das an der festen Formgebungsmatrize (1) und der beweglichen Formgebungsmatrize (2) angebracht ist und sich in einer Richtung erstreckt, in der die bewegliche Formgebungsmatrize bewegt wird;
ein Getriebe (75), das mit dem Schienenpaar in Eingriff steht; und
ein Getriebegehäuse (76), das das Getriebe und Abschnitte des Schienenpaars aufnimmt und an der Zentrierungsführungsschiene (71) angebracht ist.

8. Vorrichtung zur Herstellung von Hohlbehältern nach Anspruch 5, wobei der Zentrierungsmechanismus (80) einschließt:
eine Führungsplatte (72), die außerhalb der Heizeinheit (3) vorragt;
eine Zentrierungsführungsschiene (71), an der die Führungsplatte angepasst ist;
ein erstes Verbindungsstück (81), dessen Mittelpunkt drehbar mit der Zentrierungsführungsschiene befestigt ist; und
ein Paar zweiter Verbindungsstücke (82), die jeweils ein erstes Ende, das drehbar mit jedem der Enden des ersten Verbindungsstücks befestigt ist, und ein zweites Ende aufweisen, das drehbar an jeder der festen Formgebungsmatrize (1) und beweglichen Formgebungsmatrize (2) angebracht ist.

9. Vorrichtung zur Herstellung von Hohlbehältern nach einem der Ansprüche 1 bis 8, wobei in einem Fall, bei dem die Heizeinheit (3) während des Schweißens mit dem Paar von Werkstücken (w1, w2) in Kontakt gebracht wird,
die feste Formgebungsmatrize (1) oder die bewegliche Formgebungsmatrize (2) eine erste Kommunikationsöffnung (18) zum Kommunizieren mit der Außenseite einschließt, und
die Heizeinheit eine zweite Kommunikationsöffnung (32) zum Kommunizieren mit der ersten Kommunikationsöffnung einschließt.

10. Vorrichtung zur Herstellung von Hohlbehältern nach einem der Ansprüche 1 bis 8, wobei in einem Fall, bei dem die Heizeinheit (3) während des Schweißens mit dem Paar von Werkstücken (w1, w2) in Kontakt gebracht wird,
die Heizeinheit eine Heizelementkommunikationsöffnung (33) zum Auslassen von Luft in der festen Formgebungsmatrize (1) und der beweglichen Formgebungsmatrize (2) einschließt.

11. Vorrichtung zur Herstellung von Hohlbehältern nach einem der Ansprüche 1 bis 8, wobei in einem Fall, bei dem die Heizeinheit (3) während des Schweißens mit dem Paar von Werkstücken (w1, w2) nicht in Kontakt gebracht wird,
die Heizeinheit einen Schutzrahmen (31) aufweist, der die Heizeinheit umgibt, wobei der Schutzrahmen in Bezug auf die feste Formgebungsmatrize (1) zusammen mit der Heizeinheit und entlang der Führungsschienen (13), die zum Bewegen der Heizeinheit verwendet werden, nach vorne und nach hinten bewegt wird.

## Revendications

1. Appareil (100) de fabrication de récipient creux comprenant :
une matrice de moulage fixe (1) présentant une cavité (11) ;
une matrice de moulage mobile (2) présentant une cavité (21) et déplacée dans une direction qui la rapproche ou l'éloigne de la matrice de moulage fixe ;
une unité de chauffage (3) à placer entre la matrice de moulage fixe et la matrice de moulage mobile pour chauffer une paire de pièces de fabrication (w1, w2) dans les cavités (11, 21) de la matrice de moulage fixe et de la matrice de moulage mobile ; des rails de guidage (13) pour déplacer l'unité de chauffage ; et
un mécanisme d'entraînement (4) pour déplacer l'unité de chauffage d'avant en arrière par rapport à la matrice de moulage fixe (1) ou à la matrice de moulage mobile (2), le long des rails de guidage (13),
dans lequel les pièces de fabrication de la paire de pièces de fabrication (w1, w2) sont chauffées par l'unité de chauffage (3) et ensuite soudées l'une à l'autre.
et l'appareil (100) est **caractérisé en ce que**
les rails de guidage (13), afin de déplacer l'unité de chauffage, sont disposés en partie soit sur une surface opposée de la matrice de moulage fixe (1) pour faire face à la matrice de moulage mobile (2), soit sur une surface opposée de la matrice de moulage mobile pour faire face à la matrice de moulage fixe.

2. Appareil de fabrication de récipient creux selon la revendication 1, dans lequel chaque pièce de fabrication de la paire de pièces de fabrication (w1, w2) inclut au moins un fond et une paroi périphérique s'élevant à partir du fond, et
l'appareil (100) inclut en outre des mécanismes de maintien (16 ; 17) pour presser partiellement la paire de pièces de fabrication, dans les cavités respectives (11, 21) de la matrice de moulage fixe (1) et de la matrice de moulage mobile (2), contre la matrice de moulage fixe et la matrice de moulage mobile, respectivement.

3. Appareil de fabrication de récipient creux selon la revendication 2, dans lequel
les mécanismes de maintien (16) présentent chacun un vérin (162) et un noyau partiel (161) déplacé d'avant en arrière par le vérin,
dans lequel les noyaux partiels sont déplacés vers l'avant par les vérins pour presser partiellement les pièces de fabrication (w1, w2) contre la matrice de moulage fixe (1) et la matrice de moulage mobile (2), respectivement.

4. Appareil de fabrication de récipient creux selon la revendication 2, dans lequel
les mécanismes de maintien (17) incluent chacun un moyen d'application de force (172) pour exercer une force depuis l'extérieur sur une surface latérale de chacune des pièces de fabrication (w1, w2), et une partie de pression (171) prévue à une extrémité avant du moyen d'application de force,
dans lequel les pièces de fabrication sont pressées partiellement contre la matrice de moulage fixe (1) et la matrice de moulage mobile (2), respectivement, par des forces respectives par le moyen d'application de force.

5. Appareil de fabrication de récipient creux selon l'une quelconque des revendications 1 à 4, comprenant en outre :
un mécanisme de centrage (60 ; 70 ; 80) rendre une distance entre l'unité de chauffage (3) et la matrice de moulage fixe (1) égale à une distance entre l'unité de chauffage et la matrice de moulage mobile (2), après que l'unité de chauffage a été placée entre la matrice de moulage fixe et la matrice de moulage mobile.

6. Appareil de fabrication de récipient creux selon la revendication 5, dans lequel le mécanisme de centrage (60) inclut :
une plaque milieu (61) faisant saillie à l'extérieur de l'unité de chauffage (3) ;
un premier ressort (62) interposé entre la plaque milieu et la matrice de moulage fixe (1) ; et
un deuxième ressort (63) interposé entre la plaque milieu et la matrice de moulage mobile (2) et présentant la même constante de rappel que le premier ressort.

7. Appareil de fabrication de récipient creux selon la revendication 5, dans lequel le mécanisme de centrage (70) inclut :
une plaque de guidage (72) faisant saillie à l'extérieur de l'unité de chauffage (3) ;
un rail de guidage de centrage (71) sur lequel est ajustée la plaque de guidage ;
une paire de crémaillères (74) fixées à la matrice de moulage fixe (1) et à la matrice de moulage mobile (2) et s'étendant dans une direction selon laquelle la matrice de moulage mobile est déplacée ;
un pignon (75) engrenant avec la paire de crémaillères ; et
un boîtier de pignon (76) logeant le pignon et des parties de la paire de crémaillères et fixé au rail de guidage de centrage (71).

8. Appareil de fabrication de récipient creux selon la revendication 5, dans lequel le mécanisme de centrage (80) inclut :
une plaque de guidage (72) faisant saillie à l'extérieur de l'unité de chauffage (3) ;
un rail de guidage de centrage (71) sur lequel est ajustée la plaque de guidage ;
une première liaison (81) dont le centre est fixé de manière rotative au rail de guidage de centrage ; et
une paire de deuxièmes liaisons (82) présentant chacune une première extrémité fixée de manière rotative à chacune des extrémités de la première liaison et une seconde extrémité fixée de manière rotative à chaque matrice de moulage parmi la matrice de moulage fixe (1) et la matrice de moulage mobile (2).

9. Appareil de fabrication de récipient creux selon l'une quelconque des revendications 1 à 8, dans lequel dans un cas où l'unité de chauffage (3) est mise en contact avec la paire de pièces de fabrication (w1, w2) pendant le soudage,
la matrice de moulage fixe (1) ou la matrice de moulage mobile (2) inclut un premier orifice de communication (18) pour communiquer avec l'extérieur, et
l'unité de chauffage inclut un deuxième orifice de communication (32) pour communiquer avec le premier orifice de communication.

10. Appareil de fabrication de récipient creux selon l'une quelconque des revendications 1 à 8, dans lequel dans un cas où l'unité de chauffage (3) est mise en contact avec la paire de pièces de fabrication (w1, w2) pendant le soudage,
l'unité de chauffage inclut un orifice de communication de chauffage (33) pour évacuer l'air dans la matrice de moulage fixe (1) et la matrice de moulage mobile (2).

11. Appareil de fabrication de récipient creux selon l'une quelconque des revendications 1 à 8, dans lequel dans un cas où l'unité de chauffage (3) n'est pas mise en contact avec la paire de pièces de fabrication (w1, w2) pendant le soudage,
l'unité de chauffage présente un châssis de protection (31) entourant l'unité de chauffage, dans lequel le châssis de protection est déplacé d'avant en arrière par rapport à la matrice de moulage fixe (1), conjointement avec l'unité de chauffage et le long des rails de guidage (13) utilisés pour déplacer l'unité de chauffage.
